# EUROPEAN PATENT SPECIFICATION

(11) **EP 4 534 039 B1**
(45) Date of publication and mention of the grant of the patent: **04.11.2026**
(21) Application number: 24214983.9
(22) Date of filing: 20.05.2020
(51) Int. Cl.: A61C 5/40

(54) **APPARATUS FOR TREATING TEETH**
VORRICHTUNG ZUR BEHANDLUNG VON ZÄHNEN
APPAREIL DE TRAITEMENT DENTAIRE

(30) Priority: 20.05.2019 US 201962850467 P; 07.06.2019 US 201962858851 P
(43) Date of publication of application: 09.04.2025
(62) Document number(s) of the earlier application(s) in accordance with Art. 76 EPC: 20732359.3 / 3 972 521
(73) Proprietor: Sonendo, Inc., Laguna Hills, CA 92653 (US)
(72) Inventor: KHAKPOUR, Mehrzad, Laguna Hills, CA 92653 (US); BERGHEIM, Bjarne, Laguna Hills, CA 92653 (US); PARHAM, Tate, Ray, Laguna Hills, CA 92653 (US); SCHULTZ, Jeff, Laguna Hills, CA 92653 (US); MINASSIAN, David, Laguna Hills, CA 92653 (US)
(74) Representative: KIPA AB

(56) References cited:
- WO-A1-2014/100751
- WO-A2-2014/210220
- US-A1- 2016 095 679

## Description

### BACKGROUND

### Field of the Invention

The field relates to an apparatus for treating a tooth.

### Description of the Related Art

In conventional dental and endodontic procedures, mechanical instruments such as drills, files, brushes, etc. are used to clean unhealthy material from a tooth. For example, dentists often use drills to mechanically break up carious regions (e.g., cavities) on a surface of the tooth. Such procedures are often painful for the patient and frequently do not remove all the diseased material. Furthermore, in conventional root canal treatments, an opening is drilled through the crown of a diseased tooth, and endodontic files are inserted into the root canal system to open the canal spaces and remove organic material therein. The root canal is then filled with solid matter such as gutta percha or a flowable obturation material, and the tooth is restored. However, this procedure will not remove all organic material from the canal spaces, which can lead to post-procedure complications such as infection. In addition, motion of the endodontic file and/or other sources of positive pressure may force organic material through an apical opening into periapical tissues. In some cases, an end of the endodontic file itself may pass through the apical opening. Such events may result in trauma to the soft tissue near the apical opening and lead to post-procedure complications. Accordingly, there is a continuing need for improved dental and endodontic treatments.

US 2016/0095679 A1 discloses various systems, method, and compositions for treating a tooth. For example, an apparatus for treating a tooth is disclosed. The apparatus can include a chamber having an access port which places the chamber in fluid communication with a treatment region of the tooth when the chamber is coupled to tooth. A fluid motion generator can be coupled to the chamber. The fluid motion generator can be configured to direct fluid across the access port to generate fluid motion in the chamber. In various embodiments, fluid motion (e.g., vortices, swirl, etc.) can be induced at or near treatment regions of the tooth, such as a root canal or carious region.

WO 2014/210220 A2 discloses a dental apparatus. The dental apparatus can comprise a pressure wave generator to be disposed at a treatment region of a tooth. The pressure wave generator can include an opening to deliver a flowable filling material to the treatment region. The apparatus can include a reservoir for supplying the filling material to the pressure wave generator. The pressure wave generator can be configured to generate pressure waves through the treatment region to cause the filling material to substantially fill the treatment region.

WO 2014/100751 A1 discloses various systems, method, and compositions for treating a tooth. For example, an apparatus for treating a tooth is disclosed. The apparatus can include a chamber having an access port which places the chamber in fluid communication with a treatment region of the tooth when the chamber is coupled to tooth. A fluid motion generator can be coupled to the chamber. The fluid motion generator can be configured to direct fluid across the access port to generate fluid motion in the chamber. In various embodiments, fluid motion (e.g., vortices, swirl, etc.) can be induced at or near treatment regions of the tooth, such as a root canal or carious region.

### SUMMARY

Various non-limiting aspects of the present disclosure will now be provided to illustrate features of the disclosed apparatus, methods, and compositions. Examples of apparatus, methods, and compositions for endodontic treatments are provided. The invention is defined by the appended claims.

In one embodiment, an apparatus for treating a tooth is disclosed. The apparatus can include a fluid platform comprising a wall and a chamber at least partially defined by the wall. The fluid platform can be disposed against a tooth to retain fluid in the chamber and provide fluid communication between a treatment region of the tooth and the chamber by way of an access port. The chamber can have a central axis. A liquid supply port can be disposed to direct a liquid stream across the chamber along a stream axis non-parallel to the central axis. A suction port can be exposed to the chamber. The chamber can have a maximum lateral dimension in a plane extending substantially transverse to the central axis, the plane delimited by the wall along a boundary. A projection of the suction port onto the plane can be closer to the boundary than to the central axis of the chamber.

In some embodiments, the liquid supply port can be disposed to direct the liquid stream across the chamber to impinge on a portion of the wall opposite the liquid supply port. The apparatus can include a pressure wave generator configured to generate pressure waves and fluid motion in the chamber and the treatment region. The pressure wave generator can comprise a liquid jet device including a nozzle configured to form a liquid jet, the liquid supply port comprising the nozzle and the liquid stream comprising the liquid jet. The central axis can pass substantially transversely through a center of the access port. The central axis can lie on a second plane substantially transverse to the stream axis and the stream axis can intersect the second plane at a location closer to the central axis than to the boundary. The suction port can be closer to the boundary than to the location at which the stream axis intersects the second plane. The location at which the stream axis intersects the second plane can be closer to the central axis than to the suction port. The stream axis can intersect the central axis in some embodiments. The stream axis can be substantially perpendicular to the central axis. The liquid supply port can be disposed to direct the liquid stream through a laterally-central region of the chamber. The wall can comprise an upper wall and a sidewall extending from the upper wall, the suction port disposed closer to the sidewall than to the central axis of the chamber. The suction port can abut or be at least partially defined by the sidewall. The suction port can comprise an elongate suction port having a width and a length longer than the width. The apparatus can include a second suction port exposed to the chamber, the second suction port disposed laterally opposite the suction port. The suction port and the second suction port can be disposed symmetrically about the central axis. The suction port can be circumferentially offset relative to the liquid supply port. The suction port can be circumferentially offset from the liquid supply port by 90°. The suction port can be curved. The apparatus can include a vent exposed to ambient air, the vent in fluid communication with an outlet line connected to the suction port, the vent positioned along the outlet line at a location downstream of the suction port. The apparatus can include a tip device having a connector configured to removably connect to a handpiece, the tip device comprising the fluid platform, the liquid supply port, and the suction port.

In another embodiment, an apparatus for treating a tooth is disclosed. The apparatus can include a fluid platform comprising an upper wall, a sidewall extending from the upper wall and a chamber at least partially defined by the upper wall and the sidewall. The fluid platform can be disposed against a tooth to retain fluid in the chamber and provide fluid communication between a treatment region of the tooth and the chamber by way of an access port. The chamber can have a central axis extending substantially transversely through a center of the access port. The apparatus can include a nozzle disposed to direct a liquid jet across the chamber along a stream axis to impinge upon a portion of the sidewall opposite the nozzle, the stream axis non-parallel to the central axis, wherein the central axis lies on a plane substantially transverse to the stream axis and the stream axis intersects the plane at a location closer to the central axis than to the sidewall. The apparatus can include a suction port exposed to the chamber, wherein the suction port is disposed in the upper wall closer to the sidewall than to the central axis of the chamber.

In some embodiments, the apparatus can include a pressure wave generator configured to generate pressure waves and fluid motion in the chamber and the treatment region. The pressure wave generator can comprise the nozzle in some embodiments. The suction port can be closer to the sidewall than to the location at which the stream axis intersects the plane. The location at which the stream axis intersects the plane can be closer to the central axis than to the suction port. In some embodiments, the stream axis can intersect the central axis. In some embodiments, the stream axis can be substantially perpendicular to the central axis. The suction port can abut or be at least partially defined by the sidewall. The suction port comprises an elongate suction port having a width and a length longer than the width. The apparatus can include a second suction port exposed to the chamber, the second suction port disposed laterally opposite the suction port. The suction port and the second suction ports can be disposed symmetrically about the central axis. The suction port can be circumferentially offset relative to the nozzle. The suction port can be circumferentially offset from the nozzle by 90°. The suction port can be curved. The apparatus can include a vent exposed to ambient air, the vent in fluid communication with an outlet line connected to the suction port, the vent positioned along the outlet line at a location downstream of the suction port. The apparatus can include a tip device having a connector configured to removably connect to a handpiece, the tip device comprising the fluid platform, the nozzle, and the suction port. In some embodiments, the sidewall can extend from the upper wall at an angle, with a corner between the sidewall and the upper wall. In some embodiments, the sidewall can extend from the upper wall with a curved surface between the sidewall and the upper wall.

In another embodiment, an apparatus for treating a tooth is disclosed. The apparatus can include a tip device comprising. The tip device can include a fluid platform to be positioned against a region of a tooth, the fluid platform at least partially defining a chamber to be in fluid communication with a treatment region of the tooth. The tip device can include a pressure wave generator coupled to the platform, the pressure wave generator configured to generate pressure waves in fluid provided at the treatment region. The tip device can include a fluid outlet to convey fluid from the chamber. The tip device can include a connector that removably connects the tip device to a handpiece body.

In some embodiments, the tip device can include one or more vents configured to permit ambient air to be drawn into an outlet line downstream of the fluid outlet. The pressure wave generator can comprise a liquid jet device in some embodiments. The pressure wave generator can comprise a laser device in some embodiments. The connector can comprise internal threads to engage corresponding threads of the handpiece body. The tip device can comprise a first portion of a fluid inlet line configured to align with a second portion of the fluid inlet line disposed within the handpiece body when the connector is connected to the handpiece body. The tip device can comprise a barbed connector having a first end positioned within the first portion of the fluid inlet line and a second end configured to be removably received within the second portion of the fluid inlet line. The second end of the barbed connector can comprise an O-ring to form a seal between the barbed connector and the handpiece body when the connector is connected to the handpiece body. The apparatus can include the handpiece body, wherein the second portion of the fluid inlet line comprises a chamfered bore configured to receive the barbed connector. The tip device can comprise a first portion of a fluid outlet line in communication with the fluid outlet and configured to align with a second portion of the fluid outlet line positioned within the handpiece body when the connector is connected to the handpiece body. The connector can comprise a face seal. The connector can comprise external threads to engage corresponding threads of the handpiece body. The connector can comprise a plurality of receptacles to engage a plurality of protrusions extending from a radial wall of the handpiece body. The connector can be configured to connect to the handpiece body via a quick connect coupling. The connector can be configured to connect to the handpiece body via a snap fitting. The connector can comprise one or more protrusions positioned to be received in recesses of the handpiece body to secure the connector in a fixed orientation relative to the handpiece body. The protrusions can be hemispherical protrusions. The connector can comprise a sliding lock positioned to be received in a slot of the handpiece body to secure the connector in a fixed orientation relative to the handpiece body. The connector can comprise a slot positioned to receive a sliding lock of the handpiece body to secure the connector in a fixed orientation relative to the handpiece body. A locking mechanism can have one or more ball detents configured to secure the connector in a fixed orientation relative to the handpiece body. The tip device can comprise a tracking mechanism storing a unique identifier associated with the tip device. The tracking mechanism can be one of a radio-frequency identification (RFID) tag, a barcode, a quick response (QR) code or an electrically erasable programmable read-only memory (EEPROM). The pressure wave generator can comprise an elongated guide tube extending through the chamber and sized to be positioned in part within a chamber of a tooth when the fluid platform is positioned against the region of the tooth. The fluid platform can be configured to interact with an anterior or pre-molar tooth through a pre-formed side opening in said tooth, and the pressure wave generator can be positioned outside of the anterior or pre-molar tooth when the fluid platform interacts with the anterior or pre-molar tooth. The fluid platform can be sized to be positioned against and at least partially seal against an external surface of the tooth over a carious region such that the chamber defines an enclosed volume around the carious region at the external surface of the tooth. The pressure wave generator can be positioned outside of the carious region when the fluid platform is coupled to the external surface of the tooth. At least a portion of the pressure wave generator can be positioned within the chamber. The fluid platform can comprise an upper wall and a sidewall extending from the upper wall, the upper wall and sidewall at least partially defining the chamber, the chamber having a central axis, wherein the fluid outlet can comprise a suction port in the upper wall of the fluid platform, the suction port disposed closer to the sidewall than to the central axis of the chamber. The pressure wave generator can be configured to direct a liquid stream across the chamber along a stream axis non-parallel to the central axis, and the central axis can lie on a plane substantially transverse to the stream axis and the stream axis can intersect the plane at a location closer to the central axis than to the sidewall.

In another embodiment, a system for treating one or more teeth is disclosed. The system can include a handpiece body comprising a connector configured to removably and alternatively connect to a plurality of tip devices. The plurality of tip devices can include at least one tip device configured to treat a molar tooth, and at least one tip device configured to treat an anterior or pre-molar tooth.

In some embodiments, the plurality of tip devices comprise at least one tip device configured to treat a carious region on an external surface of the one or more teeth, and at least one tip device configured to treat a root canal. The at least one tip device configured to treat an anterior or pre-molar tooth can include a first fluid platform comprising a first chamber, the first fluid platform to be applied to a first tooth to substantially retain fluid in the first chamber and provide communication between a first treatment region of the first tooth and the first chamber. The at least one tip device configured to treat the anterior or pre-molar tooth can include a first pressure wave generator in communication with the first chamber and positioned to be outside of the first tooth during a treatment procedure, the first pressure wave generator configured to generate pressure waves and fluid motion within the first chamber and the first treatment region. The first fluid platform can comprise an upper wall and a sidewall extending from the upper wall, the upper wall and sidewall at least partially defining the first chamber, the first chamber having a central axis, and the first fluid platform can include a suction port disposed in the upper wall at a location closer to the sidewall than to the central axis of the chamber. The first pressure wave generator can be configured to direct a liquid stream across the chamber along a stream axis at an angle non-parallel to the central axis, wherein the central axis can lie on a plane substantially transverse to the stream axis and the stream axis can intersect the plane at a location closer to the central axis than to the sidewall. The at least one tip device configured to treat a molar tooth can comprise a second fluid platform to be positioned against a second tooth so as to form a second chamber in communication with a second treatment region, the second chamber bounded at least in part by the second fluid platform and a portion of the second tooth. The at least one tip device configured to treat a molar tooth can comprise a second pressure wave generator coupled to the second fluid platform, the second pressure wave generator extending at least partially into the second tooth and configured to generate pressure waves and fluid motion within the second treatment region. At least one of the plurality of tip devices can comprise a liquid jet device. At least one of the plurality of tip devices can comprise a laser device. Each of the plurality of tip devices can comprise a first portion of a fluid inlet line and the handpiece body can comprise a second portion of the fluid inlet line configured to align with the first portion of the fluid inlet line when the handpiece body is connected to the each of the plurality of tip devices. The connector can comprise a chamfered bore within the second portion of the fluid inlet line configured to receive a barbed connector extending from each of the plurality of tip devices. Each of the plurality of tip devices can comprise a first portion of a fluid outlet line and the connector can comprise a second portion of the fluid outlet line configured to align with the first portion of the fluid outlet line when the handpiece body is connected to the each of the plurality of tip devices. The connector can comprise external threads to engage corresponding internal threads of each of the plurality of tip devices. The connector can comprise a face seal. The connector can comprise internal threads to engage corresponding external threads of each of the plurality of tip devices. The connector can comprise a plurality of protrusions extending from a radial wall. The connector can comprise a quick connect coupling. The quick connect coupling can comprise a plurality of retractable ball bearings. The quick connect coupling can comprise a sliding collar. The connector can be configured to connect to each of the plurality of tips via a snap fitting. The connector can comprise one or more recesses configured to receive one or more protrusions from each of the plurality of tip devices to secure the connector in a fixed orientation relative to each of the plurality of tip devices. The recesses can be hemispherical recesses. The connector can comprise a sliding lock positioned to be received in a slot of each of the plurality of tip devices to secure the connector in a fixed orientation relative to each of the plurality of tip devices. The connector can comprise a slot positioned to receive a sliding lock of each of the plurality of tip devices to secure the connector in a fixed orientation relative to each of the plurality of tip devices. A locking mechanism can have one or more ball detents configured to secure the connector in a fixed orientation relative to each of the plurality of tip devices.

In another embodiment, a system for treating one or more teeth is disclosed. The system can include a handpiece body comprising a connector configured to removably and alternatively connect to a plurality of tip devices. The plurality of tip devices can include a first tip device. The first tip device can include a first fluid platform comprising a first chamber, the first fluid platform to be applied to a first tooth to substantially retain fluid in the first chamber and provide communication between a first treatment region of the first tooth and the first chamber. The first tip device can include a first pressure wave generator in communication with the first chamber and positioned to be outside of the first tooth during a treatment procedure, the first pressure wave generator configured to generate pressure waves and fluid motion within the first chamber and the first treatment region. The system can include a second tip device. The second tip device can include a second fluid platform to be positioned against a second tooth so as to form a second chamber in communication with a second treatment region, the second chamber bounded at least in part by the second fluid platform and a portion of the second tooth. The second tip device can include a second pressure wave generator coupled to the second fluid platform, the second pressure wave generator extending at least partially into the second tooth and configured to generate pressure waves and fluid motion within the second treatment region.

In some embodiments, at least one of the first pressure wave generator and the second pressure wave generator can comprise a liquid jet device. At least one of the first pressure wave generator and the second pressure wave generator can comprise a laser device. Each of the first tip device and the second tip device can comprise a first portion of a fluid inlet line and the handpiece body can comprise a second portion of the fluid inlet line configured to align with the first portion of the fluid inlet line when the handpiece body is connected to the each of the first tip device and the second tip device. The connector can comprise a chamfered bore within the second portion of the fluid inlet line configured to receive a barbed connector extending from each of the first tip device and the second tip device. Each of the first tip device and the second tip device can comprise a first portion of a fluid outlet line and the connector can comprise a second portion of the fluid outlet line configured to align with the first portion of the fluid outlet line when the handpiece body is connected to the each of the first tip device and the second tip device. The connector can comprise external threads to engage corresponding internal threads of each of the first tip device and the second tip device. The connector can comprise a face seal. The connector can comprise internal threads to engage corresponding external threads of each of the first tip device and the second tip device. The connector can comprise a plurality of protrusions extending from a radial wall. The connector can comprise a quick connect coupling. The quick connect coupling can comprise a plurality of retractable ball bearings. The quick connect coupling can comprise a sliding collar. The connector can be configured to connect to each of the first tip device and the second tip device via a snap fitting. The connector can comprise one or more recesses configured to receive one or more protrusions from each of the first tip device and the second tip device to secure the connector in a fixed orientation relative to each of the first tip device and the second tip device. The recesses can be hemispherical recesses. The connector can comprise a sliding lock positioned to be received in a slot of each of the first tip device and the second tip device to secure the connector in a fixed orientation relative to each of the first tip device and the second tip device. The connector can comprise a slot positioned to receive a sliding lock of each of the first tip device and the second tip device to secure the connector in a fixed orientation relative to each of the first tip device and the second tip device. A locking mechanism can have one or more ball detents configured to secure the connector in a fixed orientation relative to each of the first tip device and the second tip device. The first fluid platform can comprise an upper wall, a suction port in the upper wall, a sidewall extending from the upper wall, the chamber at least partially defined by the upper wall and the sidewall and having a central axis, the pressure wave generator configured to direct a liquid stream across the chamber along a stream axis non-parallel to the central axis, the suction port disposed closer to the sidewall than to the central axis of the chamber. The central axis can lie on a plane substantially transverse to the stream axis and the stream axis can intersect the plane at a location closer to the central axis than to the sidewall.

For purposes of this summary, certain aspects, advantages, and novel features of certain disclosed embodiments are summarized. It is to be understood that not necessarily all such advantages may be achieved in accordance with any particular embodiment of the invention. Thus, for example, those skilled in the art will recognize that the invention may be embodied or carried out in a manner that achieves one advantage or group of advantages as taught herein without necessarily achieving other advantages as may be taught or suggested herein. Further, the foregoing is intended to summarize the disclosure and is not intended to limit the scope of the invention as defined by the appended claims.

### BRIEF DESCRIPTION OF THE DRAWINGS

The foregoing and other features, aspects, and advantages of the embodiments of the apparatus and methods of treating teeth (e.g., cleaning teeth) are described in detail below with reference to the drawings of various embodiments, which are intended to illustrate and not to limit the embodiments of the invention. The drawings comprise the following figures in which:
Figure 1A is a schematic diagram of a system that includes components capable of removing unhealthy or undesirable materials from a root canal tooth.
Figure 1B is a schematic diagram of a system that includes components capable of removing unhealthy or undesirable material from a treatment region on an exterior surface of the tooth.
Figure 2A is a schematic perspective view of a treatment instrument according to one embodiment.
Figure 2B is a magnified schematic perspective view of a fluid platform disposed at a distal end portion of a handpiece of the treatment instrument of Figure 2A.
Figure 2C is a schematic bottom perspective view of the treatment instrument of Figure 2A.
Figure 2D is a schematic side sectional view of the treatment instrument of Figure 2A, taken along section 2D-2D of Figure 2A.
Figure 2E is a magnified bottom perspective sectional view of the fluid platform.
Figure 2F is a magnified view of the fluid platform shown in the section of Figure 2D.
Figure 2G is a schematic side sectional view of the fluid platform taken along section 2G-2G of Figure 2A.
Figure 2H is a top perspective sectional view of the fluid platform taken along section 2H-2H of Figure 2F.
Figure 2I is a top perspective sectional view of the fluid platform taken along section 2I-2I of Figure 2F.
Figure 2J is a top plan view of the fluid platform taken along section 2J-2J.
Figure 2K is a top plan view of the fluid platform taken along section 2I-2I.
Figure 3A is a schematic perspective view of a treatment instrument having a contra-angled handpiece body, according to another embodiment.
Figure 3B is a schematic side view of the treatment instrument of Figure 3A.
Figure 3C is a schematic perspective sectional view of the treatment instrument of Figures 3A-3B.
Figure 4A is a schematic bottom right side perspective view of a treatment instrument, according to various embodiments.
Figure 4B is a schematic top left side perspective view of the treatment instrument of Figure 4A.
Figure 4C is a schematic side perspective cross-sectional view of the treatment instrument of Figures 4A-4B.
Figure 5 is a schematic diagram of a dental treatment instrument according to various embodiments.
Figure 6 is a schematic diagram of a dental treatment instrument according to various embodiments.
Figure 7 is a schematic diagram of a dental treatment instrument according to various embodiments.
Figure 8 is a schematic front perspective view of a dental treatment instrument according to various embodiments.
Figure 9 is a schematic magnified perspective view of a connector of the treatment instrument of Figure 8.
Figure 10 is a schematic perspective sectional view of the connector of the treatment instrument of Figure 8.
Figure 11 is a schematic perspective sectional view of a tip device of the treatment instrument of Figure 8.
Figure 12 is a schematic partial sectional view of the connector of the instrument of Figure 8 that illustrates one or more vents that can be provided in various embodiments.
Figure 13A is a schematic front top perspective view of a tip device of the treatment instrument of Figure 8.
Figure 13B is a schematic rear bottom perspective view of the tip device of Figure 13A.
Figure 13C is a schematic top view of the tip device of Figure 13A.
Figure 13D is a schematic bottom view of the tip device of Figure 13A.
Figure 13E is a schematic front view of the tip device of Figure 13A.
Figure 13F is a schematic left side view of the tip device of Figure 13A.
Figure 13G is a schematic perspective view of a tip device of Figure 8 in which an additional cover member is provided at an exterior surface of the tip device.
Figure 13H is a schematic side view of a connector and guide tube of the dental treatment instrument of Figure 8.
Figure 14A is a schematic rear perspective view of the dental treatment instrument of Figure 8.
Figure 14B is a schematic front view of the dental treatment instrument of Figure 8.
Figure 14C is a schematic rear view of the dental treatment instrument of Figure 8.
Figure 14D is a schematic top view of the dental treatment instrument of Figure 8.
Figure 14E is a schematic bottom view of the dental treatment instrument of Figure 8.
Figure 14F is a schematic left side view of the dental treatment instrument of Figure 8.
Figure 14G is a schematic right side view of the dental treatment instrument of Figure 8.
Figure 15 is a schematic cross-sectional view of a dental treatment instrument according to various embodiments.
Figure 16A is a schematic front perspective view of a handpiece body of the dental treatment instrument of Figure 15.
Figure 16B is a rear perspective view of the handpiece body of Figure 16A.
Figure 16C is a front view of the handpiece body of Figure 16A.
Figure 16D is a rear view of the handpiece body of Figure 16A.
Figure 16E is schematic perspective sectional view of the handpiece body of Figure 16A.
Figure 16F is a side cross-sectional view of the handpiece body of Figure 16A.
Figure 16G is a schematic top-right perspective view of a distal portion of the handpiece body of Figure 16A.
Figure 16H is a schematic top perspective view of the distal portion of the handpiece body of Figure 16A.
Figure 16I is a schematic top-left perspective view of the distal portion of the handpiece body of Figure 16A.
Figure 17A is a cross-sectional side view of a tip device of the dental treatment instrument of Figure 15.
Figure 17B is a cross-sectional top view of the tip device of Figure 17A.
Figures 18A is a schematic side cross-sectional view of a tip device according to various embodiments.
Figure 18B is a schematic top cross-sectional view of the tip device of Figure 18A.
Figure 19 is a schematic side cross-sectional view of a tip device according to various embodiments.
Figure 20 is a schematic rear perspective view of a tip device according to various embodiments.
Figure 21 is a schematic rear perspective view of a tip device according to various embodiments.
Figure 22 is a schematic front perspective view of a tip device according to various embodiments.
Figure 23 is a schematic front perspective view of a tip device according to various embodiments.
Figure 24 is a schematic rear perspective view showing an embodiment of a connector of a tip device.
Figure 25 is a perspective view of a tip device according to various embodiments.
Figure 26 is a schematic partial view of an embodiment of a locking mechanism.
Figure 27 is a perspective view of various embodiments of covers for tip devices.
Figure 28A is a schematic front perspective view of a handpiece body according to various embodiments.
Figure 28B is a schematic sectional perspective view of the handpiece body of Figure 28A.
Figure 29 is a schematic partial view of an embodiment of a connector of a handpiece body.
Figure 30 is a schematic partial view of a handpiece body portion of an embodiment of a locking mechanism.

Throughout the drawings, unless otherwise noted, reference numbers may be re-used to indicate a general correspondence between referenced elements. The drawings are provided to illustrate example embodiments described herein and are not intended to limit the scope of the disclosure.

### DETAILED DESCRIPTION

The present disclosure describes apparatus, methods, and compositions for performing dental and/or endodontic procedures. Various embodiments disclosed herein can effectively and safely remove unhealthy material from a treatment region of a tooth, e.g., from within the tooth and/or from outside surfaces of the tooth. In particular, the embodiments disclosed herein can remove unhealthy materials, such as unhealthy organic matter, inorganic matter, pulp tissue, caries, stains, calculus, plaque, biofilm, bacteria, pus, decayed tooth matter, and food remnants from the treatment region without substantially damaging healthy dentin or enamel. For example, the disclosed apparatus, methods, and compositions advantageously may be used with root canal cleaning treatments, *e.g*., to efficiently remove unhealthy or undesirable materials such as organic and/or inorganic matter from a root canal system and/or to disinfect the root canal system. The disclosed embodiments may also be used to treat carious regions (*e.g*., remove decayed material) on an exterior surface of the tooth. Organic material (or organic matter) includes organic substances typically found in healthy or diseased teeth or root canal systems such as, for example, soft tissue, pulp, blood vessels, nerves, connective tissue, cellular matter, pus, and microorganisms, whether living, inflamed, infected, diseased, necrotic, or decomposed. Inorganic matter includes calcified tissue and calcified structures, which are frequently present in the root canal system. In some embodiments, the root canal can be filled with an obturation material (*e.g.*, a flowable obturation material that can be hardened into a solid or semi-solid state, gutta percha or other solid or semi-solid materials) after treatment of the root canal.

### I. OVERVIEW OF VARIOUS DISCLOSED EMBODIMENTS

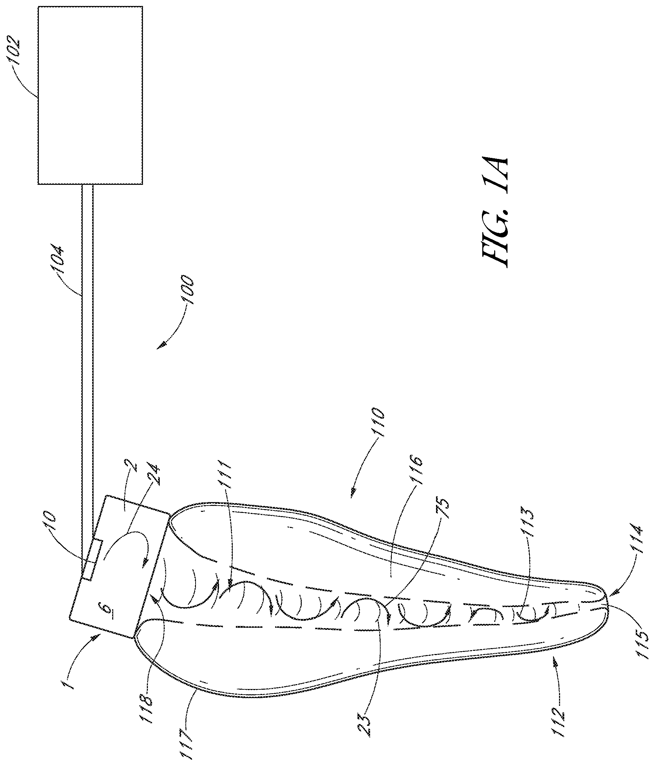

Figure 1A is a schematic diagram of a system 100 that includes components capable of removing unhealthy or undesirable materials from a tooth 110. The tooth 110 illustrated in Figure 1A is a premolar tooth, *e.g.,* a tooth located between canine and molar teeth in a mammal such as a human. Although the illustrated tooth 110 comprises a premolar tooth, it should be appreciated that the tooth 110 to be treated can be any type of tooth, such as a molar tooth or an anterior tooth (*e.g.,* an incisor or canine tooth). The tooth 110 includes hard structural and protective layers, including a hard layer of dentin 116 and a very hard outer layer of enamel 117. A pulp cavity 111 is defined within the dentin 116. The pulp cavity 111 comprises one or more root canals 113 extending toward an apex 114 of each root 112. The pulp cavity 111 and root canal 113 contain dental pulp, which is a soft, vascular tissue comprising nerves, blood vessels, connective tissue, odontoblasts, and other tissue and cellular components. Blood vessels and nerves enter/exit the root canal 113 through a tiny opening, the apical foramen or apical opening 115, near a tip of the apex 114 of the root 112. It should be appreciated that, although the tooth 110 illustrated herein is a premolar, the embodiments disclosed herein can advantageously be used to treat any suitable type of tooth, including molars, canines, incisors, etc.

As illustrated in Figure 1A, the system 100 can be used to remove unhealthy materials (such as organic and inorganic matter) from an interior of the tooth 110, *e.g*., from the root canal 113 of the tooth 110. For example, an endodontic access opening 118 can be formed in the tooth 110, *e.g.,* on an occlusal surface, or on a side surface such as a buccal surface or a lingual surface. The access opening 118 provides access to a portion of a pulp cavity 111 of the tooth 110. The system 100 can include a console 102 and a treatment instrument 1 comprising a pressure wave generator 10 and a fluid platform 2 adapted to be positioned over or against a treatment region of the tooth 110. The fluid platform 2 can define a chamber 6 configured to retain fluid therein. In some embodiments, the fluid platform 2 can be part of a removable tip device that is removably coupled to a handpiece which can be held or pressed against the tooth 110 by the clinician. In other embodiments, the fluid platform 2 may not be removably connected to the handpiece, *e.g.,* the fluid platform 2 may be integrally formed with the handpiece, or may be connected to the handpiece in a manner intended to be non-removable. In some embodiments, the fluid platform 2 can be attached to the tooth*, e.g.,* using an adhesive. For example, in some embodiments, the fluid platform 2 may not be used with a handpiece. One or more conduits 104 can electrically, mechanically, and/or fluidly connect the console 102 with the fluid platform 2 and pressure wave generator 10. The console 102 can include a control system and various fluid management systems configured to operate the pressure wave generator 10 during a treatment procedure. Additional examples of system components that can be used in the system 100 are disclosed throughout U.S. Patent No. 9,504,536.

As explained herein, the system 100 can be used in cleaning procedures to clean substantially the entire root canal system. For example, in various embodiments disclosed herein, the pressure wave generator 10 can generate pressure waves with a single frequency or multiple frequencies. The single frequency may be a low frequency below the audible range, a frequency within the audible range, or a relatively higher frequency above the audible range. For example, in various embodiments disclosed herein, the pressure wave generator 10 can generate pressure waves 23 of sufficient power and relatively low frequencies to produce fluid motion 24 in the chamber 6 - such that the pressure wave generators 10 disclosed herein can act as a fluid motion generator - and can generate pressure waves of sufficient power and at relatively higher frequencies to produce surface effect cavitation on a dental surface, either inside or outside the tooth. That is, for example, the pressure wave generators 10 disclosed herein can act as fluid motion generators to generate large-scale or bulk fluid motion 24 in or near the tooth 110, and can also generate smaller-scale fluid motion at higher frequencies. In some arrangements, the fluid motion 24 in the chamber 6 can generate induced fluid motion such as vortices 75, swirl, a chaotic or turbulent flow, etc. in the tooth 110 and root canal 113 that can clean and/or fill the canal 113.

In some embodiments, the system 100 can additionally or alternatively be used in filling procedures to fill a treated region of the tooth, *e.g.*, to obturate a treated root canal system. The treatment instrument 1 can generate pressure waves and fluid motion that can cause a flowable filling material to substantially fill the treated region. The flowable filling material can be hardened to restore the tooth. Additional details of systems that utilize pressure wave generators 10 to fill a treatment region can be found throughout U.S. Patent No. 9,877,801.

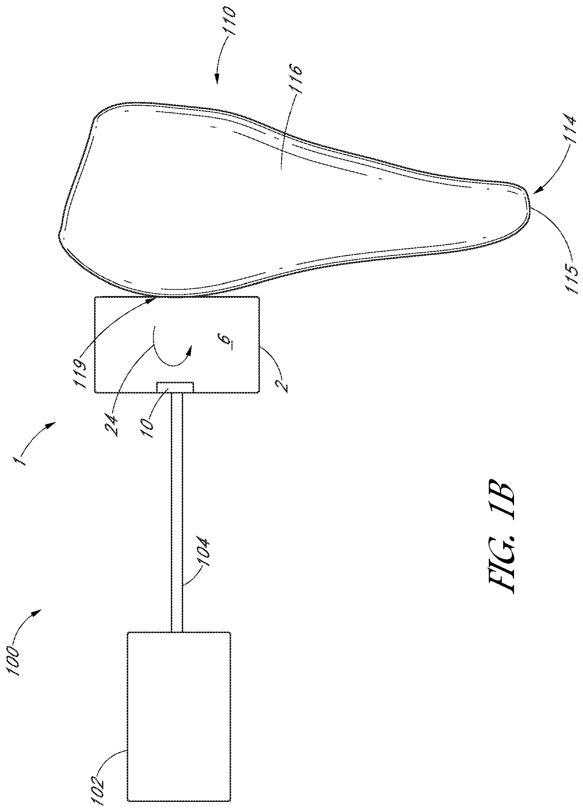

Figure 1B is a schematic diagram of a system 100 that includes components capable of removing unhealthy or undesirable material from a treatment region on an exterior surface 119 of the tooth. For example, as in Figure 1A, the system 100 can include a treatment instrument 1 including a fluid platform 2 and a pressure wave generator 10. The fluid platform 2 can communicate with the console 102 by way of the one or more conduits 104. Unlike the system 100 of Figure 1A, however, the fluid platform 2 is coupled to a treatment region on an exterior surface 119 of the tooth 10. For example, the system 1 of Figure 1B can be activated to clean an exterior surface of the tooth 110, *e.g.,* a carious region of the tooth 110. In such embodiments, the clinician can provide the chamber 6 over any surface or region of the tooth 110 that includes diseased tissue to provide fluid communication between the pressure wave generator 10 and the treatment region. As with the embodiment of Figure 1A, fluid motion 24 can be generated in the fluid platform 2 and chamber 6, which can act to clean the treatment region of the tooth 110. Further, as explained above, the system 100 can additionally or alternatively be used to fill the treatment region, *e.g.,* the treated carious region on the exterior surface 119 of the tooth 110.

As explained herein, the disclosed pressure wave generators 10 can be configured to generate pressure waves 23 with energy sufficient to clean undesirable material from a tooth. The pressure wave generator 10 can be a device that converts one form of energy into pressure waves 23 within the treatment liquid. The pressure wave generator 10 can induce, among other phenomena, fluid dynamic motion of the treatment liquid (*e.g.,* in the chamber 6), fluid circulation, turbulence, and other conditions that can enable the cleaning of the tooth 110. The pressure wave generators 10 disclosed in each of the figures described herein may be any suitable type of pressure wave generator.

The pressure wave generator 10 can be used to clean the tooth 110 by creating pressure waves 23 that propagate through the treatment liquid, *e.g*., through treatment fluid retained at least partially retained in the fluid platform 2. In some implementations, the pressure wave generator 10 may also create cavitation, acoustic streaming, shock waves, turbulence, etc. In various embodiments, the pressure wave generator 10 can generate pressure waves 23 or acoustic energy having a broadband power spectrum. For example, the pressure wave generator 10 can generate acoustic waves at multiple different frequencies, as opposed to only one or a few frequencies. Without being limited by theory, it is believed that the generation of power at multiple frequencies can help to remove various types of organic and/or inorganic materials that have different material or physical characteristics at various frequencies.

In some embodiments, the pressure wave generator 10 can comprise a liquid jet device. The liquid jet can be created by passing high pressure liquid through an orifice. The liquid jet can create pressure waves 23 within the treatment liquid. In some embodiments, the pressure wave generator 10 comprises a coherent, collimated jet of liquid. The jet of liquid can interact with liquid in a substantially-enclosed volume (e.g., the chamber 6) and/or an impingement member (*e.g*., a distal impingement plate on a distal end of a guide tube, or a curved surface of the chamber walls) to create the pressure waves 23. In addition, the interaction of the jet and the treatment fluid, as well as the interaction of the spray which results from hitting the impingement member and the treatment fluid, may assist in creating cavitation and/or other acoustic effects to clean the tooth. In other embodiments, the pressure wave generator 10 can comprise a laser device, as explained herein. Other types of pressure wave generators, such as mechanical devices, may also be suitable.

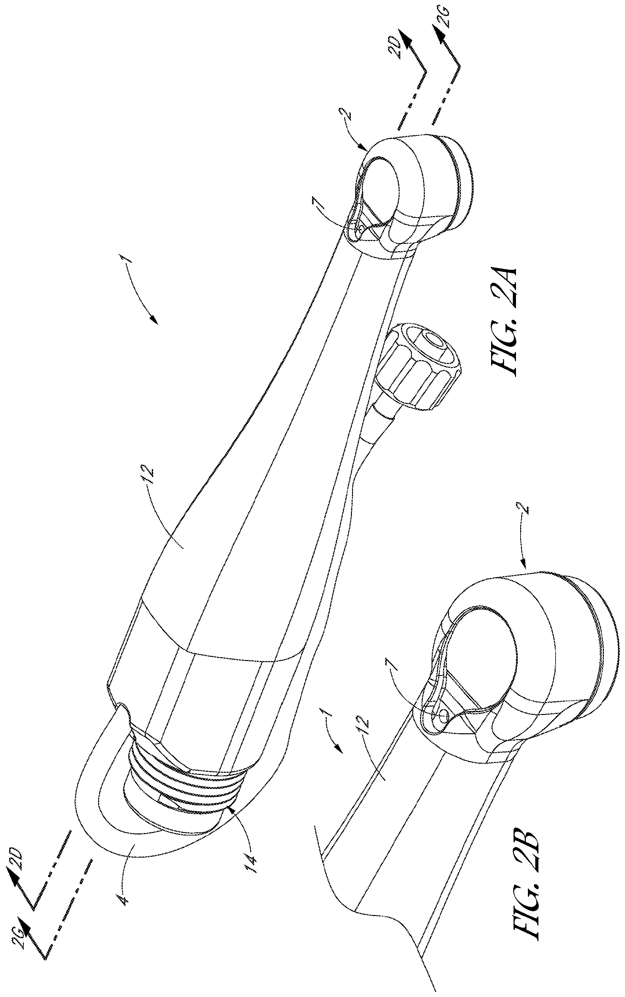

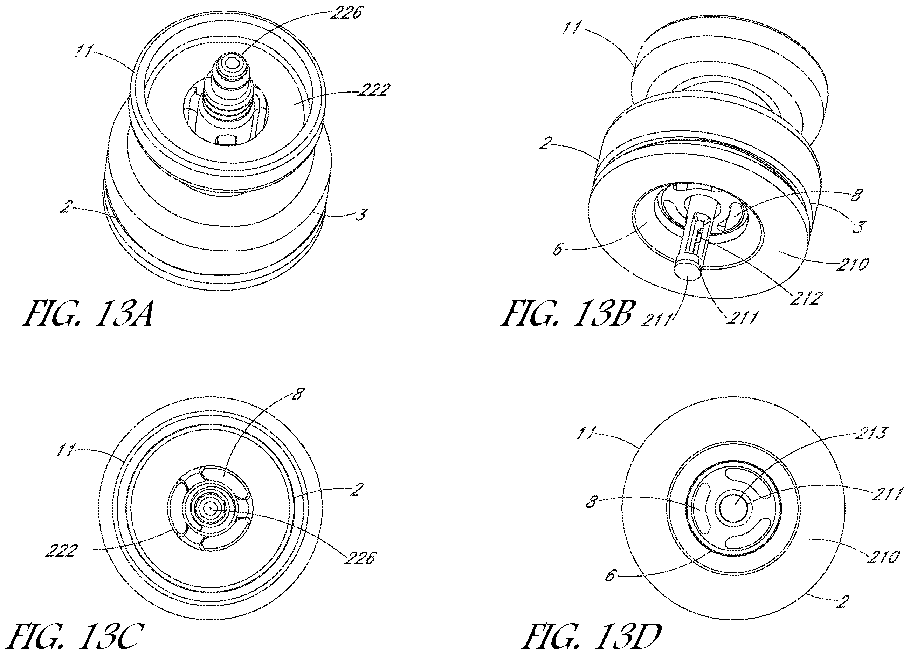

The pressure wave generators 10 disclosed herein can generate pressure waves having a broadband acoustic spectrum with multiple frequencies. The pressure wave generator 10 can generate a broadband power spectrum of acoustic power with significant power extending from about 1Hz to about 1000 kHz, including, *e.g.*, significant power in a range of about 1 kHz to about 1000 kHz (e.g., the bandwidth can be about 1000 kHz). The bandwidth of the acoustic energy spectrum may, in some cases, be measured in terms of the 3-decibel (3-dB) bandwidth (e.g., the full-width at half-maximum or FWHM of the acoustic power spectrum). In various examples, a broadband acoustic power spectrum can include significant power in a bandwidth in a range from about 1 Hz to about 500 kHz, in a range from about 1 kHz to about 500 kHz, in a range from about 10 kHz to about 100 kHz, or some other range of frequencies. In some implementations, a broadband spectrum can include acoustic power above about 1 MHz. Beneficially, a broadband spectrum of acoustic power can produce a relatively broad range of bubble sizes in the cavitation cloud and on the surfaces on the tooth, and the implosion of these bubbles may be more effective at disrupting tissue than bubbles having a narrow size range. Relatively broadband acoustic power may also allow acoustic energy to work on a range of length scales, e.g., from the cellular scale up to the tissue scale. Accordingly, pressure wave generators that produce a broadband acoustic power spectrum (e.g., some embodiments of a liquid jet) can be more effective at tooth cleaning for some treatments than pressure wave generators that produce a narrowband acoustic power spectrum. Additional examples of pressure wave generators that produce broadband acoustic power are described in Figures 2A-2B-2 and the associated disclosure of U.S. Patent No. 9,675,426, and in Figures 13A-14 and the associated disclosure of U.S. Patent No. 10,098,717.

The dental treatments disclosed herein can be used with any suitable type of treatment fluid, *e.g.,* cleaning fluids. In filling procedures, the treatment fluid can comprise a flowable filling material that can be hardened to fill the treatment region. The treatment fluids disclosed herein can be any suitable fluid, including, *e.g*., water, saline, etc. In some embodiments, the treatment fluid can be degassed, which may improve cavitation and/or reduce the presence of gas bubbles in some treatments. In some embodiments, the dissolved gas content can be less than about 1% by volume. Various chemicals can be added to treatment solution, including, *e.g.,* tissue dissolving agents (*e.g.,* NaOCl), disinfectants (*e.g.,* chlorhexidine), anesthesia, fluoride therapy agents, EDTA, citric acid, and any other suitable chemicals. For example, any other antibacterial, decalcifying, disinfecting, mineralizing, or whitening solutions may be used as well. Various solutions may be used in combination at the same time or sequentially at suitable concentrations. In some embodiments, chemicals and the concentrations of the chemicals can be varied throughout the procedure by the clinician and/or by the system to improve patient outcomes. The pressure waves 23 and fluid motion 24 generated by the pressure wave generator 10 can beneficially improve the efficacy of cleaning by inducing low-frequency bulk fluid motion and/or higher-frequency acoustic waves that can remove undesirable materials throughout the treatment region.

In some systems and methods, the treatment fluids used with the system 100 can comprise degassed fluids having a dissolved gas content that is reduced when compared to the normal gas content of the fluid. The use of degassed treatment fluids can beneficially improve cleaning efficacy, since the presence of bubbles in the fluid may impede the propagation of acoustic energy and reduce the effectiveness of cleaning. In some embodiments, the degassed fluid has a dissolved gas content that is reduced to approximately 10%-40% of its normal amount as delivered from a source of fluid (e.g., before degassing). In other embodiments, the dissolved gas content of the degassed fluid can be reduced to approximately 5%-50% or 1%-70% of the normal gas content of the fluid. In some treatments, the dissolved gas content can be less than about 70%, less than about 50%, less than about 40%, less than about 30%, less than about 20%, less than about 10%, less than about 5%, or less than about 1% of the normal gas amount. In some embodiments, the degassed fluids may be exposed to a specific type of gas, such as ozone, and carry some of the gas *(e.g.,* ozone) with them into the treatment region, for example, in the form of gas bubbles. At the treatment region, the gas bubbles expose the treatment region to the gas *(e.g.,* ozone) for further disinfection of the region. Additional details regarding the use of degassed treatment liquids may be found in U.S. Patent No. 9,675,426.

### II. EXAMPLES OF TREATMENT INSTRUMENTS

Various embodiments disclosed herein relate to a dental treatment instrument 1 configured to clean and/or fill a treatment region of the tooth 110. The treatment instruments disclosed herein demonstrate improved efficacy at cleaning the tooth 110, including root canal spaces and associated tubules and carious regions on an exterior surface of the tooth 110.

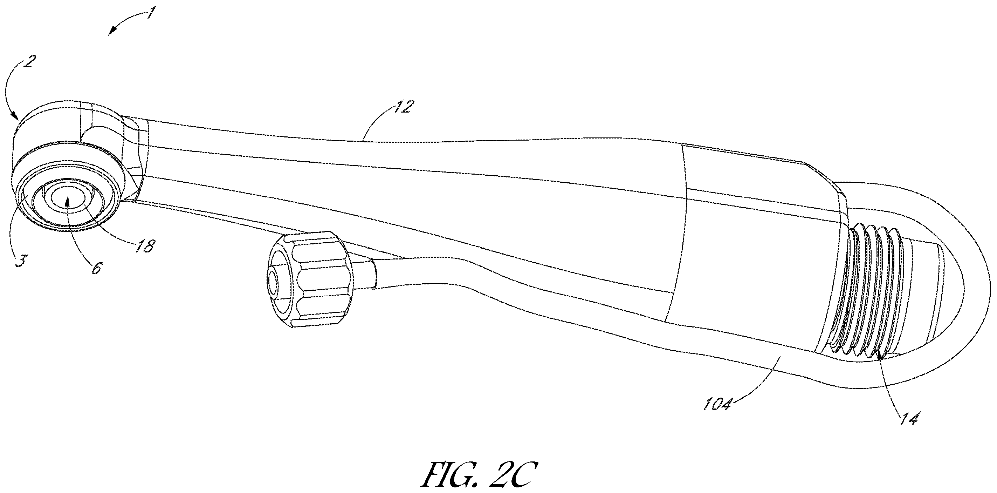

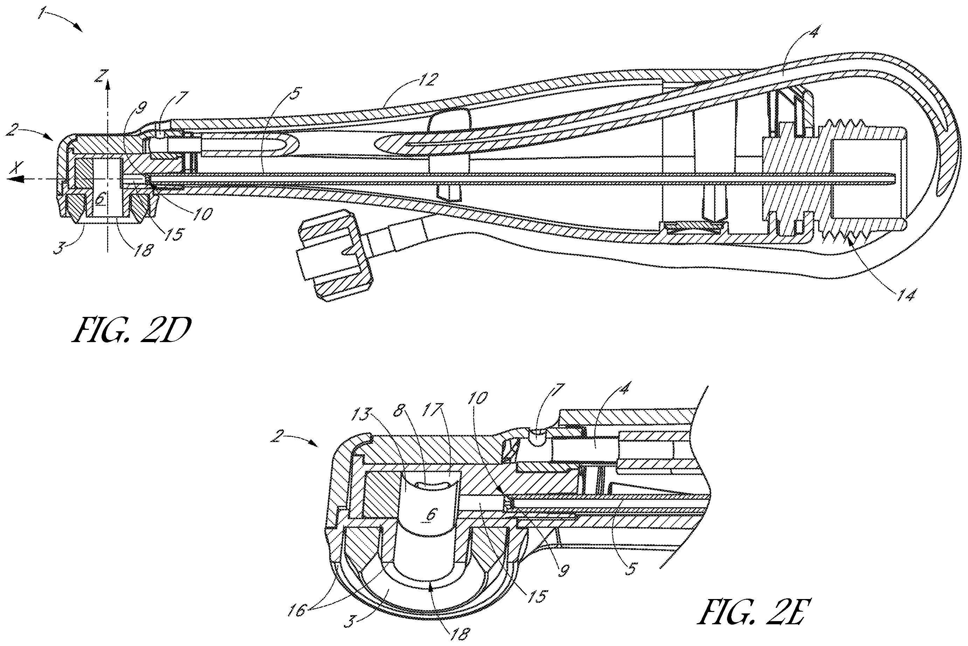

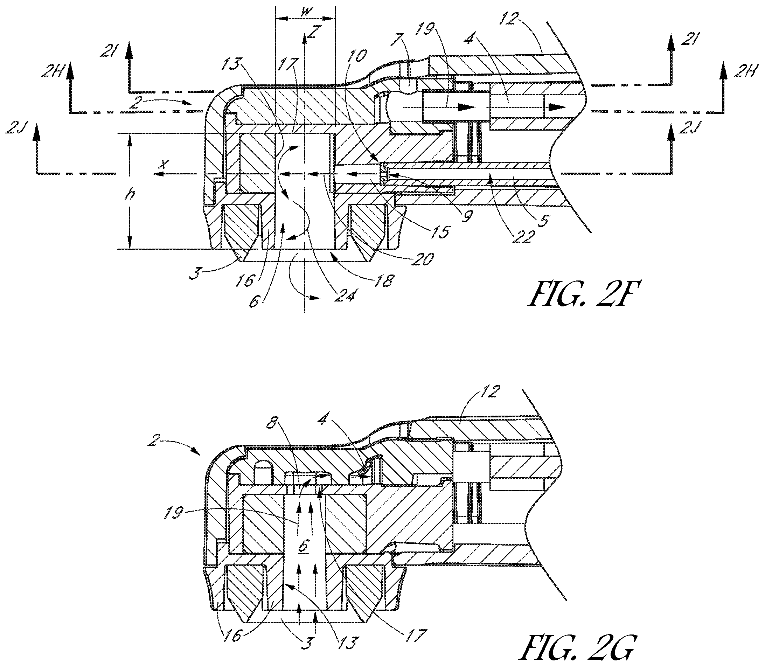

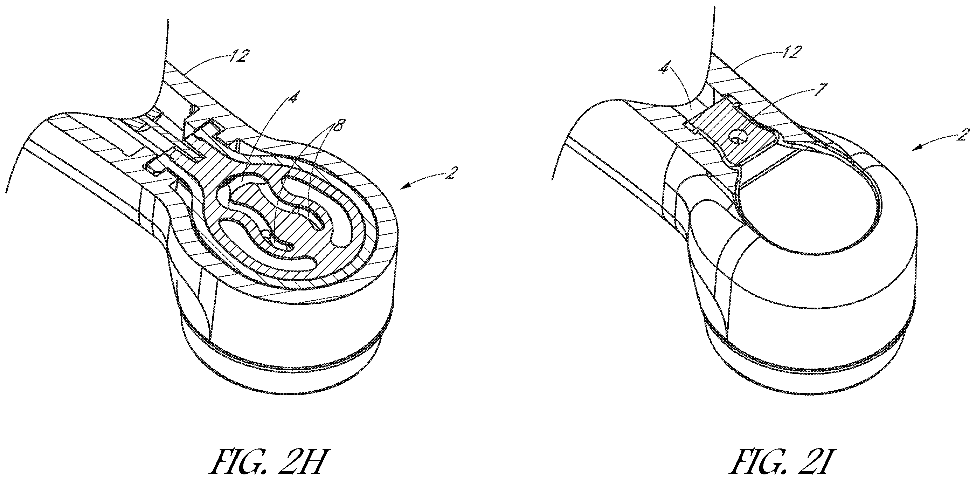

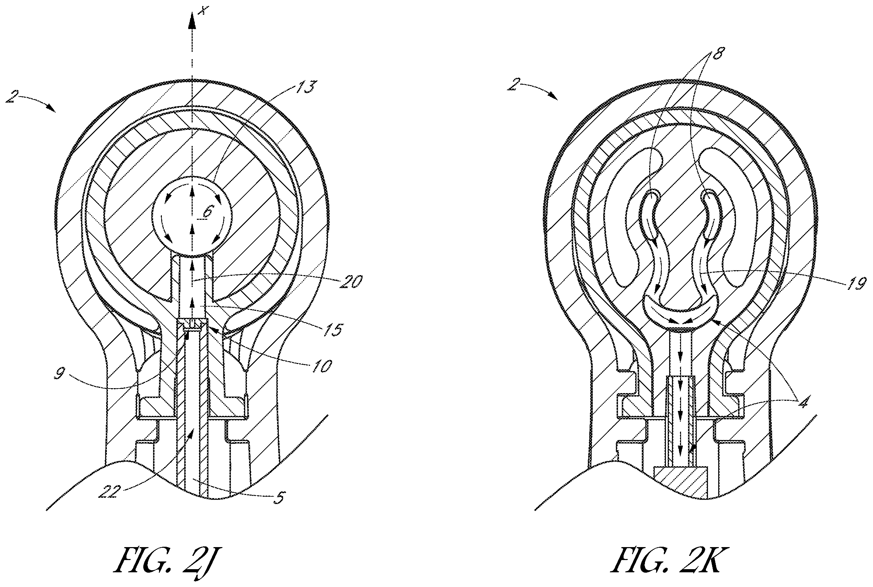

Figures 2A-2K illustrate an example of such a treatment instrument 1. In particular, Figure 2A is a schematic perspective view of a treatment instrument 1 according to one embodiment. Figure 2B is a magnified schematic perspective view of a fluid platform 2 disposed at a distal end portion of a handpiece 12 of the treatment instrument 1 of Figure 2A. Figure 2C is a schematic bottom perspective view of the treatment instrument 1 of Figure 2A. Figure 2D is a schematic side sectional view of the treatment instrument 1 of Figure 2A, taken along section 2D-2D of Figure 2A. Figure 2E is a magnified bottom perspective sectional view of the fluid platform 2. Figure 2F is a magnified view of the fluid platform 2 shown in the section of Figure 2D. Figure 2G is a schematic side sectional view of the fluid platform 2 taken along section 2G-2G of Figure 2A. Figure 2H is a top perspective sectional view of the fluid platform 2 taken along section 2H-2H of Figure 2F. Figure 2I is a top perspective sectional view of the fluid platform 2 taken along section 2I-2I of Figure 2F. Figure 2J is a top plan view of the fluid platform 2 taken along section 2J-2J. Figure 2K is a top plan view of the fluid platform 2 taken along section 2I-2I.

The treatment instrument 1 of Figures 2A-2K includes a handpiece 12 sized and shaped to be gripped by the clinician. A fluid platform 2 can be coupled to a distal portion of the handpiece 12. As explained herein, in some embodiments, the fluid platform 2 can form part of a removable tip device 11 (see below) that can be removably connected to the handpiece 12. In other embodiments, the fluid platform 2 can be non-removably attached to the handpiece 12 or can be integrally formed with the handpiece 12. In still other embodiments, the fluid platform 12 may not couple to a handpiece and may instead serve as a treatment cap that is adhered (or otherwise coupled or positioned) to the tooth without using a handpiece. As shown in Figure 2A, an interface member 14 can be provided at a proximal end portion of the handpiece 12, which can removably couple to the one or more conduits 104 to provide fluid communication between the console 102 and the treatment instrument 1.

As shown in Figures 2A-2B, and as explained herein, a vent 7 can be provided through a portion of the handpiece 12 to provide fluid communication between an outlet line 4 (which can comprise one of the at least one conduits 104 described above) and ambient air. As explained herein, the vent 7 can serve to regulate the pressure in the fluid platform 2 and can improve the safety and efficacy of the treatment instrument 1. As shown in Figure 2C, an access port 18 can be provided at a distal portion of the fluid platform 2 to provide fluid communication between a chamber 6 defined by the fluid platform 2 and the treatment region of the tooth 110. For example, as explained above in Figure 1A, in root canal cleaning procedures, a sealing cap 3 at the distal portion of the fluid platform 2 can be positioned against the tooth 110 over the access opening 118 to provide fluid communication between the chamber 6 and the interior of the tooth 110 (*e.g.,* the pulp cavity 111 and root canal(s) 113). In other embodiments, as explained above in Figure 1B, the sealing cap 3 can be positioned against the tooth 110 over the carious region at an exterior surface 119 of the tooth 110 to provide fluid communication between the chamber 6 and the carious region to be treated. The pressure waves 23 and fluid motion 24 can propagate throughout the treatment region to clean the treatment region.

Turning to Figures 2D-2G, the fluid platform 2 can have one or a plurality of walls that define the chamber 6. For example, as shown in Figures 2E-2G the fluid platform 2 can comprise at least one wall including a curved sidewall 13 and an upper wall 17 disposed at an upper end of the chamber 6 opposite the access port 18. In the illustrated embodiment, the curved sidewall 13 can define a generally cylindrical chamber 6 with a generally circular cross-section, and can extend from the upper wall 17 at an angle. In other embodiments, however, the curved sidewall 13 can be elliptical or can have other curved or angular surfaces. The sidewall 13 can extend non-parallel to (*e.g*., substantially transverse to) the upper wall 17. The sidewall 13 can extend from the upper wall 17 at any suitable non-zero angle, for example, by about 90° in some embodiments. In other embodiments, the sidewall 13 can extend from the upper wall 17 by an angle greater than or less than 90°. In other embodiments, the sidewall 13 can extend from the upper wall 17 by different angular amounts along a perimeter of the sidewall 13 such that the shape of the chamber 6 may be irregular or asymmetric. In the illustrated embodiment, the interior angle between the upper wall 17 and sidewall 13 can comprise an angle or comer. In other embodiments, however, the interior interface between the upper wall 17 and sidewall 13 can comprise a curved or smooth surface without corners. For example, in some embodiments, the one or more walls can comprise a curved profile, such as a quasi-spherical profile.

The sealing cap 3 can be coupled or formed with the platform 2. As shown, for example, a flange 16 can comprise a U-shaped support with opposing sides, and the sealing cap 3 can be disposed within the flange 16. The flange 16 can serve to mechanically connect the sealing cap 3 to the distal portion of the handpiece 12. The access port 18 can be provided at the distal end portion of the chamber 6 which places the chamber 6 in fluid communication with a treatment region of the tooth 110 when the chamber 6 is coupled to the tooth (*e.g*., pressed against the tooth, adhered to the tooth, or otherwise coupled to the tooth). For example, the sealing cap 3 can be pressed against the tooth by the clinician to substantially seal the treatment region of the tooth.

The chamber 6 can be shaped to have any suitable profile. In various embodiments, and as shown, the chamber 6 can have a curved sidewall 13, but in other embodiments, the chamber 6 can have a plurality of angled sidewalls 13 that may form angled interior corners. The sectional plan view (*e.g.*, bottom sectional view) of the chamber 6 can accordingly be rounded, *e.g.,* generally circular as shown in, *e.g.,* Figures 2C and 2J. In some embodiments, the sectional plan view (*e.g*., bottom sectional view) of the chamber 6 can be elliptical, polygonal, or can have an irregular boundary.

The chamber 6 can have a central axis *Z*. For example, as shown in Figure 2D, the central axis *Z* can extend substantially transversely through a center (*e.g.,* a geometric center) of the access port 18 (*e.g*., through a distal-most plane of the chamber 6 defined at least in part by the access port 18). In various embodiments, and as shown in Figure 2D, for a chamber 6 with a circular (or approximately circular) cross-section (as viewed from a bottom plan view) the central axis *Z* can pass substantially transversely through the approximate center of the access port 18 that at least partially defines a distal portion of the chamber 6 and/or the upper wall 17 that at least partially defines the top of the chamber 6. For example, the central axis Z can pass substantially transversely through the geometric center of the upper wall 17 and/or the access port 18 at an angle in a range of 85° to 95°, at an angle in a range of 89° to 91°, or at an angle in a range of 89.5° to 90.5°.

As explained above, although the illustrated chamber 6 has a generally or approximately circular cross-section, the chamber 6 may have other suitable shapes as viewed in various bottom-up cross-sections. In such embodiments, a plurality of planes (*e.g*., two, three, or more planes) parallel to the plane of the opening of the access port 18 of the chamber 6 (which may be at a distal-most plane of the chamber 6) can be delimited or bounded by the sidewall 13 of the chamber. The central axis *Z* can pass through the approximate geometric center of each of the bounded planes parallel to the access port 18. For example, the chamber 6 may have a sidewall 13 that is angled non-transversely relative to the upper wall 17, and/or may have a sidewall 13 with a profile that varies along a height *h* of the chamber 6. The central axis *Z* can pass through the geometric center of each of the plurality of parallel bounded planes.

A pressure wave generator 10 (which can serve as a fluid motion generator) can be arranged to generate pressure waves and rotational fluid motion in the chamber 6. The pressure wave generator 10 can be disposed outside the tooth during a treatment procedure. The pressure wave generator 10 can comprise a liquid supply port that can deliver a liquid stream (such as a liquid jet) across the chamber 6 (*e.g*., completely across the chamber 6 to impinge upon a portion of the sidewall 13 opposite the pressure wave generator 10 or supply port) to generate pressure waves and fluid motion. For example, the pressure wave generator 10 can comprise a liquid jet device that includes an orifice or nozzle 9. Pressurized liquid 22 can be transferred to the nozzle 9 along an inlet line 5. The inlet line 5 can be connected to a fluid source in the console 102, for example, by way of the one or more conduits 104. The nozzle 9 can have a diameter selected to form a high velocity, coherent, collimated liquid jet. The nozzle 9 can be positioned at a distal end of the inlet line 5. In various embodiments disclosed herein, the nozzle 9 can have an opening with a diameter in a range of 59 microns to 69 microns, in a range of 60 microns to 64 microns, or in a range of 61 microns to 63 microns. For example, in one embodiment, the nozzle 9 can have an opening with a diameter of approximately 62 microns, which has been found to generate liquid jets that are particularly effective at cleaning teeth. Although the illustrated embodiments are configured to form a liquid jet (*e.g.,* a coherent, collimated jet), in other embodiments, the liquid stream may not comprise a jet but instead a liquid stream in which the momentum of the stream is generally parallel to the stream axis.

As shown in Figures 2D and 2F, the nozzle 9 can be configured to direct a liquid stream comprising a liquid jet 20 laterally through a laterally central region of the chamber 6 along a jet axis *X* (also referred to as a stream axis) non-parallel to (*e.g.,* substantially perpendicular to) the central axis *Z*. In some embodiments, the jet axis *X* can intersect the central axis *Z*. In various embodiments, the liquid stream (*e.g*., the jet 20) can intersect the central axis *Z*. In other embodiments, the jet axis X can be slightly offset from the central axis *Z*. The liquid jet 20 can generate fluid motion 24 (*e.g.*, vortices) that can propagate throughout the treatment region (*e.g*., throughout a root canal, throughout a carious region on an external surface of the tooth, etc.) to interact with and remove unhealthy material. The fluid motion generator 10 can also act as a pressure wave generator to generate broadband pressure waves through the fluid in the chamber 6 to clean the treatment region.

As shown in Figures 2F and 2J, the nozzle 9 can form the coherent, collimated liquid jet 20, which can pass along a guide channel 15 disposed between the nozzle 9 and the chamber 6. The guide channel 15 may provide improved manufacturability and can serve as a guide for the liquid jet 20 to the chamber 6. During operation, the chamber 6 can fill with the treatment liquid supplied by the liquid jet 20 (and/or additional inlets to the chamber 6). The jet 20 can enter the chamber 6 from the guide channel 15 and can interact with the liquid retained in the chamber 6. The interaction between the liquid jet 20 and the liquid in the chamber 6 can create the pressure waves 23 (*see* Figures 1A-1B), which can propagate throughout the treatment region. The liquid jet 20 can impact the sidewall 13 of the chamber 6 at a location opposite the nozzle 9 along the jet axis *X*. The sidewall 13 of the chamber 6 can serve as an impingement surface such that, when the jet 20 impinges on or impacts the sidewall 13, the curved or angled surface of the sidewall 13 creates fluid motion along the sidewall 13, the upper wall 17, and/or within the fluid retained in the chamber 6. Moreover, the movement of the jet 20 and/or the liquid stream diverted by the sidewall 13 can induce fluid motion 24 in the chamber 6 and through the treatment region.

Without being limited by theory, for example, directing the jet 20 across the chamber 6 (*e.g*., completely across the chamber 6) along the jet axis *X* at a central location within the chamber 6 can induce fluid motion 24 comprising vortices that rotate about an axis non-parallel to (*e.g*., perpendicular to) the central axis *Z* of the chamber 6. The vortices can propagate through the treatment region, and can provide bulk fluid motion that flushes undesirable material (*e.g.,* decayed organic matter) out of the treatment region. The combination of the vortex fluid motion 24 and the generated pressure waves 23 can effectively remove undesirable materials of all shapes and sizes from large and small spaces, cracks, and crevices of the treatment region. The fluid motion 24 may be turbulent in nature and may rotate about multiple axes, which can increase the chaotic nature of the flow and improve treatment efficacy.

As shown in Figures 2G, 2H, and 2K, the treatment instrument 1 can also include an evacuation or outlet line 4 to convey waste or effluent liquids 19 to a waste reservoir, which may be located in the system console 102. A suction port 8 or fluid outlet can be exposed to the chamber 6 along a wall of the chamber 6 offset from the central axis *Z*. For example, as shown in Figure 2G, the suction port 8 can be disposed along the upper wall 17 of the chamber 6 opposite the access port 18. A vacuum pump (not shown) can apply vacuum forces along the outlet line 4 to draw waste or effluent liquids 19 out of the chamber 6 through the suction port 8, along the outlet line 4, and to the waste reservoir. In some embodiments, only one suction port 8 can be provided. However, as shown in the embodiment of Figures 2H and 2K, the instrument 1 can include a plurality (*e.g.,* two) of (*e.g.,* two) suction ports positioned laterally opposite one another. In some embodiments, more than two suction ports can be provided. The suction ports 8 can be disposed laterally opposite one another, *e.g.*, symmetrically relative to, the central axis *Z*. As shown, the suction ports 8 can be disposed through the upper wall 17 at or near the sidewall 13, *e.g.,* closer to the sidewall 13 than to the central axis Z of the chamber 6. In the illustrated embodiment, the suction ports 8 can abut or be defined at least in part by the sidewall 13. In other embodiments, the suction ports 8 can be laterally inset from the sidewall 13. In still other embodiments, the suction ports 8 can be disposed on the sidewall 13 of the chamber 6.

Accordingly, in various embodiments, the chamber 6 can have a maximum lateral dimension in a first plane extending substantially transverse to (*e.g.,* at an angle in a range of 85° to 95°, at an angle in a range of 89° to 91°, or at an angle in a range of 89.5° to 90.5° relative to) the central axis Z. The first plane can be delimited by a wall of the chamber along a boundary of the wall. A projection of the suction port 8 onto the first plane can be closer to the boundary than to the central axis *Z* of the chamber 6. For example, in the illustrated embodiment, the chamber 6 can comprise an approximately circular bottom cross-section, and the first plane substantially transverse to the central axis *Z* can be delimited along the sidewall 13 by an approximately circular boundary. A projection of the suction port 8 onto that first plane can be closer to the approximately circular boundary than to the central axis *Z*.

As shown, the suction ports 8 can comprise elongated and curved (*e.g.* kidney-shaped) openings. The curvature of the suction ports 8 may generally conform to the curvature of the sidewall 13 of the chamber 6 in some embodiments. In other embodiments, the suction ports 8 may not be curved but may be polygonal (*e.g*., rectangular). Beneficially, the use of an elongate suction port 8, in which a length of the opening is larger than a width, can prevent large particles from clogging the suction port 8 and/or outlet line 4. In some embodiments, the suction port 8 can comprise an opening flush with the upper wall 17. In other embodiments, the suction port 8 can protrude partially into the chamber 6.

In some embodiments, pressure wave generator 10 and the suction port(s) 8 can be shaped and positioned relative to the chamber 6 such that, during operation of the treatment instrument 1 in a treatment procedure, pressure at a treatment region of the tooth (e.g., within the root canals of the tooth as measured in the apex) can be maintained within a range of 50 mmHg to -500 mmHg. Maintaining the pressure at the treatment region within desired ranges can reduce the risk of pain to the patient, prevent extrusion of liquids apically out of the apical opening 115, and/or improve cleaning efficacy. For example, the pressure wave generator 10 and the suction port(s) 8 can be shaped and positioned relative to the chamber 6 such that, during operation of the treatment instrument 1 in a treatment procedure, apical pressure at or near the apex 114 and apical opening 115 are maintained at less than 50 mmHg, at less than 5 mmHg, at less than -5 mmHg, *e.g.*, within a range of -5 mmHg to -200 mmHg, within a range of -5 mmHg to -55 mmHg, or within a range of -10 mmHg to -50 mmHg. Maintaining the apical pressure within these ranges can reduce the risk of pain to the patient, prevent extrusion of liquids apically out of the apical opening 115, and/or improve cleaning efficacy.

In some embodiments, to regulate apical pressure, the suction ports 8 can be circumferentially offset from the nozzle 9. For example, in the illustrated embodiment, the suction ports 8 can be circumferentially offset from the nozzle 9 by about 90°.

Further, the chamber 6 can have a width *w* (*e.g.,* a diameter or other major lateral dimension of the chamber 6) and a height *h* extending from the upper wall 17 to the access port 18. The width *w* and height *h* can be selected to provide effective cleaning outcomes while maintaining apical pressure in desired ranges. In various embodiments, for example, the width *w* of the chamber 6 can be in a range of 2 mm to 4 mm, in a range of 2.5 mm to 3.5 mm, or in a range of 2.75 mm to 3.25 mm (*e.g.,* about 3 mm). A height *h* of the chamber 6 can be in a range of about 1 mm to 30 mm, in a range of about 2 mm to 10 mm, or in a range of about 3 mm to 5 mm..

The pressure wave generator 10 (*e.g.,* the nozzle 9) can be positioned relative to the chamber 6 at a location that generates sufficient fluid motion 24 to treat the tooth. As shown, the pressure wave generator 10 (including, *e.g*., the nozzle 9) can be disposed outside the chamber 6 as shown (for example, recessed from the chamber 6). In some embodiments, the pressure wave generator 10 can be exposed to (or flush with) the chamber 6 but may not extend into the chamber 6. In still other embodiments, at least a portion of the pressure wave generator 10 may extend into the chamber 6. The pressure wave generator 10 (for example, including the nozzle 9) can be positioned below or distal the suction ports 8. Moreover, in the illustrated embodiment, the jet 20 can be directed substantially perpendicular to the central axis *Z* (such that an angle between the jet axis *X* and the central axis *Z* is approximately 90°). The jet 20 can pass proximate the central axis *Z* of the chamber, *e.g.,* pass through a laterally central region of the chamber 6. For example, in some embodiments, the jet axis *X* or the liquid jet 20 can intersect the central axis *Z* of the chamber. In some embodiments, the jet 20 may pass through a laterally central region of the chamber 6 but may be slightly offset from the central axis *Z*. For example, the central axis *Z* can lie in a second plane that is substantially transverse to the jet axis *X* (*e.g.,* the second plane can be angled relative to the jet axis *X* in a range of 85° to 95°, in a range of 89° to 91°, or in a range of 89.5° to 90.5°). The stream or jet axis *X* can intersect the second substantially transverse plane at a location closer to the central axis *Z* than to the sidewall 13.

Accordingly, as explained above, the chamber 6 can have a maximum lateral dimension in a first plane extending substantially transverse to the central axis *Z*, and the central axis Z can lie in the second plane extending substantially transverse to the stream or jet axis *X.* The first plane can be delimited by a wall (for example, the sidewall 13) of the chamber 6 along a boundary of the wall. As explained above, the suction port 8 can be closer to the boundary (*e.g.,* the sidewall 13 in some embodiments) than to the central axis *Z.* The suction port 8 may also be closer to the boundary than to the location at which the stream or jet axis *X* intersects the second plane. Further, the location at which the stream or jet axis *X* intersects the second plane can be closer to the central axis *Z* than to the suction port 8 (or to a projection of the suction port 8 onto that second plane). Although the wall illustrated herein can comprise an upper wall and sidewall extending therefrom, in other embodiments, the wall can comprise a single curved wall, or can have any other suitable shape.

As explained above, the vent 7 can be provided through the platform 2 and can be exposed to ambient air. The vent 7 can be in fluid communication with the evacuation line 4 that is fluidly connected to the suction port 8. The vent 7 can be disposed along the evacuation or outlet line 4 at a location downstream of the suction port 8. The vent 7 can beneficially prevent or reduce over-pressurization in the chamber 6 and treatment region. For example, ambient air from the outside environs can be entrained with the effluent liquid 19 removed along the outlet line 4. The vent 7 can regulate pressure within the treatment region by allowing the application of a static negative pressure. For example, a size of the vent 7 can be selected to provide a desired amount of static negative pressure at the treatment region. The vent 7 can be positioned at a location along the outlet line 4 so as to prevent ambient air from entering the chamber 6 and/or the treatment region of the tooth 110. Additional details regarding vented fluid platforms can be found throughout U.S. Patent No. 9,675,426.

Beneficially, the embodiment of Figures 2A-2K and like embodiments can create sufficient fluid motion and pressure waves to provide a thorough cleaning of the entire treatment region. Components such as the pressure wave generator 10, the chamber 6, the suction port 10, the vent 7, etc. can be arranged as shown and described in the illustrated embodiment, so as to provide effective treatment (*e.g.,* effective cleaning or filling), improved pressure regulation (*e.g.,* maintain pressures at the treatment region within suitable ranges), and improved patient outcomes as compared with other devices.

The embodiments of the treatment instrument 1 disclosed herein can be used in combination with the features shown and described throughout U.S. Patent No. 10,363,120.

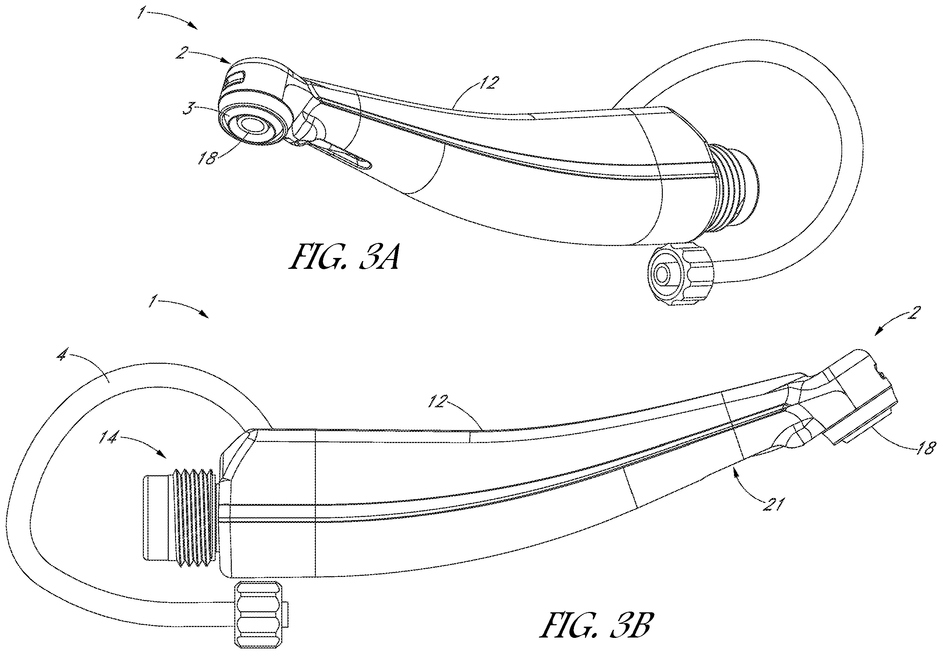

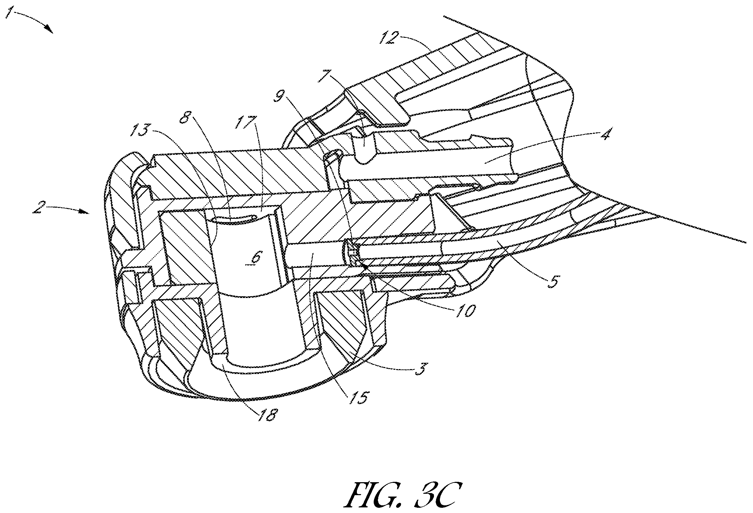

Figures 3A-3C illustrate a treatment instrument 1 according to another embodiment. Unless otherwise noted, components of Figures 3A-3C may be the same as or generally similar to like-numbered components of Figures 2A-2K. The treatment instrument 1 can include the handpiece 12 and fluid platform 2 connected to or formed with the handpiece 12. Unlike the embodiment of Figures 2A-2K, however, the handpiece 12 includes a contra-angled handpiece body 21. The contra-angled handpiece body 21 can be curved upwardly which can improve the maneuverability and/or handling of the handpiece 12 by the clinician.

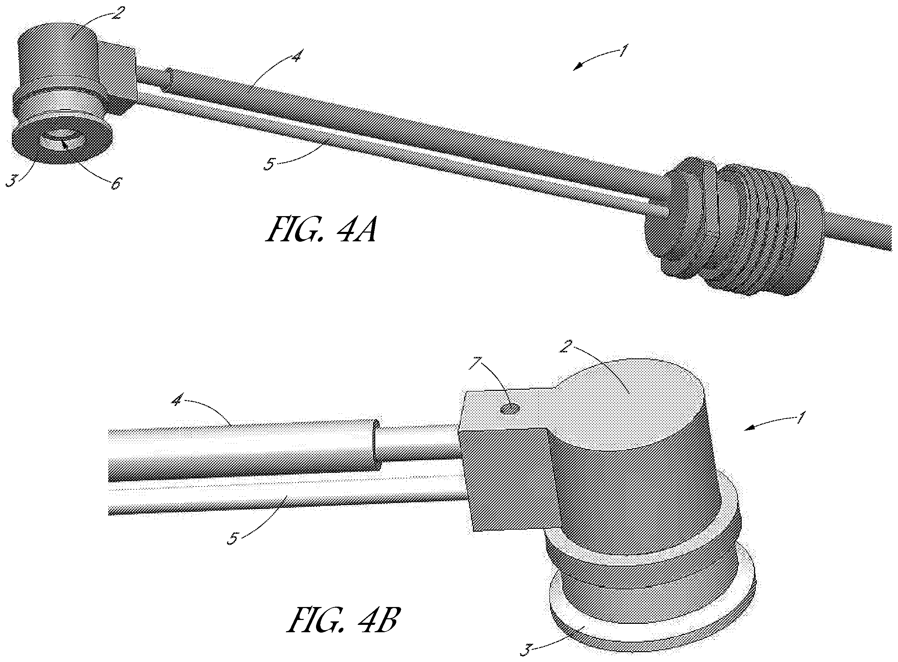

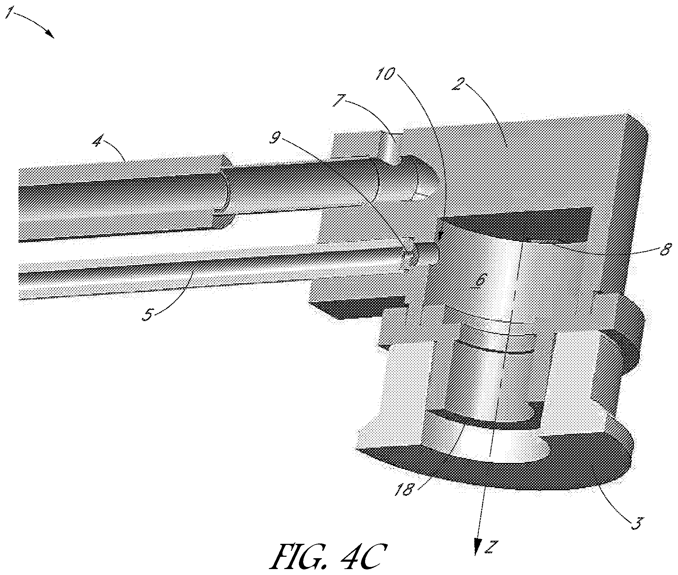

Figure 4A is a schematic bottom right side perspective view of a treatment instrument 1 according to various embodiments. Figure 4B is a schematic top left side perspective view of the treatment instrument 1 of Figure 4A. Figure 4C is a schematic side perspective cross-sectional view of the treatment instrument of Figures 4A-4B. Unless otherwise noted, components of Figures 4A-4C may be the same as or generally similar to like-numbered components of Figures 2A-2K. In Figures 4A-4B, the handpiece body is hidden for ease of illustrating the other components of the treatment instrument. In the embodiment of Figures 4A-4C, the suction port 8 may comprise a polygonal (*e.g.,* rectangular) elongated opening. Further, in the embodiment of Figures 4A-4C, the access port 18 may have a diameter or major dimension smaller than that of the chamber 6 disposed above or proximal the access port 18. In other embodiments, the access port 18 may have a diameter or major dimension larger than or substantially the same as that of the chamber 6 disposed above or proximal the access port 18.

### III. EXAMPLES OF TREATMENT INSTRUMENTS WITH REMOVABLE TIP DEVICES

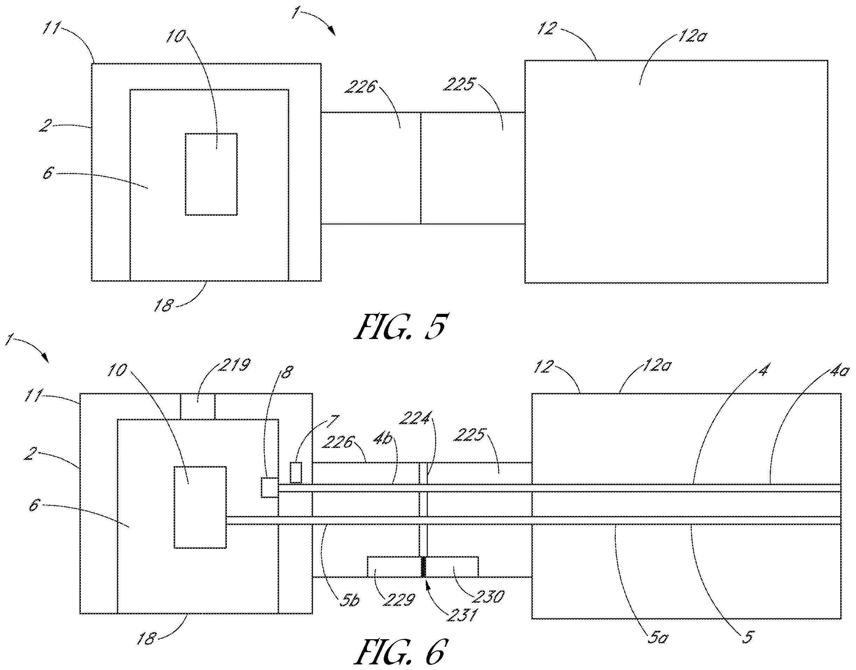

Figure 5 is a schematic diagram of a dental treatment instrument 1 according to various embodiments. Unless otherwise noted, components of Figure 5 may be same as or generally similar to like-numbered components of Figures 2A-2K, 3A-3C, or 4A-4C. The dental treatment instrument 1 can include a tip device 11 and a handpiece 12 having a handpiece body 12a. The tip device 11 can be removably connected to a distal portion of the handpiece body 12a. In various embodiments, the handpiece body 12a can include a connector 225 that removably connects the handpiece body 12a to the tip device 11. The tip device 11 can include a connector 226 that removably connects the tip device 11 to the handpiece body 12a. The connector 225 can couple with the connector 226 to removably couple the tip device 11 to the handpiece body 12a. The tip device 11 can be configured to be positioned against or over a treatment region to treat the tooth (*e.g.,* to clean and/or fill the treatment region of the tooth).

In some embodiments, the connector 225 can include external threads to engage corresponding internal threads of the connector 226. In some embodiments, the connector 225 can include internal threads to engage corresponding external threads of the connector 226. In some embodiments, the connector 225 can include a plurality of protrusions to engage a plurality of receptacles of the connector 226. In some embodiments, the connector 225 can include a plurality of protrusions extending from a radial wall to engage to engage a plurality of receptacles of the connector 226.

In some embodiments, the connector 225 can couple to the connector 226 via a quick connect coupling. In some embodiments, the quick connect coupling includes a plurality of retractable ball bearings. In some embodiments, the quick connect coupling includes a sliding collar. In some embodiments, a sliding collar on one of the connectors 225 or 226 can slide along an axis of connection allowing ball bearings to retract. When the collar is slid forward, the ball bearings can be pushed into features on the other connector 225 or 226 to thereby prevent detachment of the disposable tip. In some embodiments, the quick connect coupling can be implemented with an active connector (e.g., collar with ball bearings) or a passive connector (*e.g.,* a fixed geometry which interfaces with the bearings) on the handpiece body 12a. In some embodiments, the handpiece body 12a can beneficially include the passive connector to facilitate effective decontamination and sterilization.

In some embodiments, the connector 225 can couple to the connector 226 via a snap fitting. Either the connector 225 or the connector 226 can include one or more snap features which can be depressed by pressing or squeezing the feature. Complementary mating components on the other connector 225 or 226 can include features or undercuts to which the snap features engage.

In some embodiments, the connector 226 can include internal threads to engage corresponding external threads of the connector 225. In some embodiments, the connector 226 can include external threads to engage corresponding internal threads of the connector 225. In some embodiments, the connector 226 can include a plurality of receptacles to engage corresponding protrusions the connector 225. In some embodiments, the connector 226 can include a plurality of receptacles to engage corresponding protrusions extending from a radial wall of the connector 225. In some embodiments, the connector 226 includes a plurality of protrusions to engage corresponding receptacles of the connector 225.

In various embodiments, therefore, the tip device 11 can be connected to the handpiece body 12a before a treatment procedure. After the tip device 11 is connected to the handpiece body 12a, a clinician can conduct a treatment procedure, such as a cleaning procedure. After the treatment procedure, the clinician can remove the treatment tip device 11 from the handpiece body 12a.

In various embodiments, the handpiece body 12a can be used in multiple procedures, *e.g.,* a predetermined number of procedures. In various embodiments, the handpiece body 12a can be configured to connect to multiple tip devices 11. In some embodiments, the handpiece body 12a can be configured to connect to multiple tip devices 11 having the same configuration. In other embodiments, the handpiece body 12a can be configured to connect to multiple tip devices 11 having different configurations. For example, in some embodiments, the handpiece body 12a can connect to multiple tip devices 11 configured for treatment of different types of teeth, *e.g.,* a first tip device for treatment of a molar tooth and a second tip device for treatment of an anterior or pre-molar tooth. In some embodiments, the handpiece body 12a can connect to multiple tip devices configured for treatment of different types of treatment regions, *e.g.,* a first tip device for treatment of a root canal and a second tip device for treatment of an external carious region.

In various embodiments, the tip device 11 can be disposable. Beneficially, providing a disposable tip device 11 in conjunction with a generally reusable handpiece body 12a can enable the clinician to reduce costs associated with disposing the handpiece body 12a after a single use.

In various embodiments, the tip device 11 can include a fluid platform 2 configured to be positioned against a region of a tooth. In some embodiments, the fluid platform 2 can be sized and selected to be positioned against a treatment region of a tooth, *e.g.* , over an access opening that provides access to a root canal of the tooth (*see, e.g.,* U.S. Patent No. 9,675,426 and U.S. Patent No. 10,363,120.). In other embodiments, the fluid platform 2 can be positioned over a carious region on an external surface of the tooth (*see, e.g.,* U.S. Publication No. 2015/0044632).

The fluid platform 2 can at least partially define a chamber 6 to be in fluid communication with a treatment region of a tooth. In some embodiments, the fluid platform 2 can be sized to be applied to a tooth to substantially retain fluid in the chamber 6 during a treatment procedure. In some embodiments, the treatment region can be a carious region. In other embodiments, the treatment region can be a root canal. In some embodiments, at least a portion of the chamber 6 is positioned outside of the tooth when the fluid platform is positioned against a region of the tooth.

In some embodiments, the fluid platform 2 can be sized to be applied to a molar tooth to substantially retain fluid in the chamber 6 during a treatment procedure. In some embodiments, the fluid platform can 2 be sized to be applied to an anterior or pre-molar tooth to substantially retain fluid in the chamber 6 during a treatment procedure.

In some embodiments, the fluid platform 2 is sized to be positioned against and at least partially seal against an external surface of the tooth over a carious region such that the chamber 6 defines an enclosed volume around the carious region at the external surface of the tooth.

In some embodiments, the fluid platform 2 can include a fluid retainer or cap and a contact member configured to contact a portion of the treatment region. During use, the clinician can press the contact member (which can comprise a flexible member, sponge, etc.) on the treatment region so as to substantially seal the treatment region. In some embodiments, the clinician can adhere or otherwise connect the fluid platform 2 to the treatment region so as to substantially seal the treatment region.

In various embodiments the tip device 11 can include a pressure wave generator 10 configured to generate pressure waves and/or fluid motion in fluid provided at the treatment region of the tooth. In some embodiments, the pressure wave generator can generate pressure waves and/or fluid motion at locations remote from the pressure wave generator 10. In some embodiments, the pressure wave generator 10 can be coupled to the platform 2.

In various embodiments, the pressure wave generator 10 can be used to clean a treatment region (*e.g.,* root canal or carious region) of a tooth, as explained at least in U.S. Patent No. 9,675,426, U.S. Patent No. 10,363,120, or U.S. Publication No. 2015/0044632. In various embodiments, the pressure wave generator 10 can be used to fill a treatment region (*e*.*g.,* root canal or carious region) of a tooth, as explained at least in U.S. Patent No. 9,877,801.

In some embodiments, the pressure wave generator 10 can include a liquid jet device. The liquid jet device can produce a liquid jet that can interact with liquid in the chamber 6 and/or in the treatment region to generate pressure waves and fluid motion in the treatment region. The generated pressure waves and fluid motion can be used to clean the treatment region in various procedures, such as those described in Patent No. 9,675,426, U.S. Patent No. 10,363,120, and U.S. Publication No. 2015/0044632. In some arrangements, the generated pressure waves and fluid motion can be used to fill the treatment region, such as procedures described in U.S. Patent No. 9,877,801.

In some embodiments, the pressure wave generator 10 can include a laser device. The laser device can produce a laser beam that can interact with liquid in the chamber 6 and/or in the treatment region to generate pressure waves and fluid motion in the treatment region. The generated pressure waves and fluid motion can be used to clean the treatment region in various procedures, such as those described in Patent No. 9,675,426, U.S. Patent No. 10,363,120, and U.S. Publication No. 2015/0044632. In some arrangements, the generated pressure waves and fluid motion can be used to fill the treatment region, such as procedures described in U.S. Patent No. 9,877,801.

In other embodiments, the pressure wave generator 10 can comprise other types of pressure wave generators described in, *e.g.,* U.S. Patent No. 9,675,426, U.S. Patent No. 10,363,120, U.S. Patent No. 9,877,801, U.S. Patent No. 9,504,536, and U.S. Publication No. 2015/0044632. The pressure wave generator 10 can be arranged to generate broadband pressure waves at multiple frequencies, as explained in U.S. Patent No. 9,675,426, U.S. Patent No. 10,363,120, U.S. Patent No. 9,877,801, U.S. Patent No. 9,504,536, and U.S. Publication No. 2015/0044632, which can be beneficial in cleaning or filling the treatment region. In various embodiments, degassed treatment liquids can be used in cooperation with the pressure wave generator 10, for example, to enhance cleaning of the treatment region.

In some embodiments, the pressure wave generator 10 can be positioned outside of the tooth when the fluid platform 2 is applied to the tooth. In some embodiments, when the fluid platform 2 is sized to be positioned against and at least partially seal against an external surface of the tooth over a carious region, the pressure wave generator can be positioned outside of the carious region when the fluid platform is coupled to the external surface of the tooth. In some embodiments, such as root canal treatment procedures, the pressure wave generator 10 can extend into a chamber of the tooth. In some embodiments, the pressure wave generator 10 can extend into the treatment region of the tooth. In some embodiments, for example when the tooth is an anterior or pre-molar tooth, the fluid platform 2 can be configured to interact with the anterior or pre-molar tooth through a pre-formed side opening in the tooth, and the pressure wave generator can be positioned outside of the anterior or pre-molar tooth when the fluid platform interacts with the anterior or pre-molar tooth.

In various embodiments, the handpiece body 12a can provide fluid, electric, and/or data communication to the tip device 11. In some embodiments, the handpiece body 12a can include one or more conduits in communication with one or more conduits of the tip device 11. The conduits of the handpiece body 12a can provide fluid, electric, and/or data communication to the conduits of the tip device 11.

Figure 6 is a schematic diagram of a dental treatment instrument 1 according to various embodiments. Unless otherwise noted, components of Figure 6 may be same as or generally similar to like-numbered components of Figures 2A-2K, 3A-3C, 4A-4C, or 5. As shown in Figure 6, in some embodiments, the handpiece body 12a can include a conduit 5a configured to be in communication with a conduit 5b of the tip device 11 to form a fluid inlet line 5 when the handpiece body 12a is coupled to the tip device 11.

In some embodiments, the line 5 can be coupled to the pressure wave generator. In some embodiments, the line 5 can be a fluid inflow line or fluid inlet line. For example, in embodiments in which the pressure wave generator 10 includes a liquid jet device, the line 5 can deliver fluid to the liquid jet device.

In various embodiments, the tip device 11 can include one or more fluid outlets or suction ports 8 to convey fluid from the chamber 6. The suction port(s) 8 can be in communication with a suction pump (which, for example, may be located in the console). When the suction pump is active, liquid can be drawn out of the chamber 6, through the port(s) 8 and to an outlet line 4, which can convey the removed liquid to a waste container, which may be located in the console for example.

In some embodiments, the handpiece body 12a can include a conduit 4a configured to be in communication with a conduit 4b of the tip device 11 to form line 4 when the handpiece body 12a is coupled to the tip device 11. The line 4 can be coupled to the port(s) 8 to form a fluid outlet line 4.

In various embodiments, the tip device 11 can include one or more vents 7 configured to permit ambient air to be drawn into the line 4 downstream of the port(s) 8. The vent(s) 7 can beneficially provide a pressure regulation function, as explained in, e.g., Patent No. 9,675,426, U.S. Patent No. 10,363,120, and U.S. Publication No. 2015/0044632.

In various embodiments, the handpiece body 12a can include one or more seals 224. The seals 224 can provide a fluid seal between the handpiece body 12a and the tip device 11. In some embodiments, the one or more seals 224 can include one or more O-rings. In some embodiments, the one or more seals 224 can include one or more face seals. In some embodiments, the one or more seals 224 can include one or more elastomeric sleeves.

In various embodiments, the dental treatment instrument 1 can include a locking mechanism 231 for removably securing the distal tip device 11 in a fixed orientation relative to the handpiece body 12a. In certain embodiments, the tip device 11 can include a locking member 229 configured to couple with a corresponding locking member 230 of the handpiece body 12a to secure the distal tip device 11 in a fixed orientation relative to the handpiece body 12a. In some embodiments, the locking member 230 can be coupled to or part of the connector 225. In some embodiments, the locking member 229 can be coupled to or part of the connector 226.

In some embodiments, the locking member 230 can include one or more protrusions positioned to be received in one or more recesses of the locking member 229. In some embodiments, the protrusions can be hemispherical protrusions. In some embodiments, the locking member 229 can include one or more protrusions positioned to be received in one or more recesses of the locking member 230. In some embodiments, the protrusions can be hemispherical protrusions. In some embodiments, the locking member 229 can include a sliding lock positioned to be received in a slot of the locking member 230. In some embodiments, the locking member 230 can include a sliding lock positioned to be received in a slot of the locking member 229. In some embodiments, the locking mechanism 231 can include one or more ball detents configured to secure the tip device 11 in a fixed orientation relative to the handpiece body 12a.

In some embodiments, the connection between the connectors 225 and 226 can be capable of withstanding pressures of at least 70,300 kPa (10,200 psi), and at least 103,400 kPa (15,000 psi). In some embodiments, a connection between the connectors 225 and 226 can be sufficiently secure so as to not unthread, or otherwise detach on its own, while the inlet 5 is pressurized. In other embodiments, for example, in some embodiments in which the connectors 225 and 226 are threads, the locking mechanism 231 may be employed to limit or prevent the ability of the connectors 225 and 226 from detaching. In some embodiments, the connectors 225 and 226 and seals 224 can be designed so that the seal is breached prior to full detachment of the tip device 11. Such a mechanism can ensure that in the event of a clog or occlusion, stored pressure within the line 5 is released prior to full mechanical detachment of the tip device 11.

In some embodiments, the tip device 11 can include a tracking mechanism or communication device 219 storing a unique identified associated with the tip device 11. The communication device can be one or more of a radio-frequency identification tag (RFID), a barcode, a quick response (QR) code or an electrically erasable programmable read-only memory (EEPROM). As explained in U.S. Patent No. 9,504,536, the communications device 219 can wirelessly or otherwise communicate with a reader, which can comprise processing circuitry configured to monitor a status of the tip device 11 and/or the treatment procedure. In various embodiments, the system can be configured to ensure that only authorized tip devices 11 may be used with the handpiece body 12a. In various embodiments, the system can be configured to ensure that the tip device 11 is used in only a single procedure. In other embodiments, the system can be configured to determine in how many procedures the tip device 11 has been used. The communications device 219 can serve various other functions, including those described in connection with the RFID devices disclosed in U.S. Patent No. 9,504,536. Similarly, in certain embodiments, a handpiece body 12a can include a tracking mechanism or communications device, which can wirelessly or otherwise communicate with a reader, which can comprise processing circuitry configured to monitor a status of the handpiece body 12a and/or the treatment procedure. In certain embodiments, the communications device 219 can be writeable or programmable so as to provide data which allows the console to detect previous use of the tip device 11. In certain embodiments, the communications device 219 can be integrated into the tip device 11, into a protective cover for the tip device 11, or into the packaging of the tip device 11.

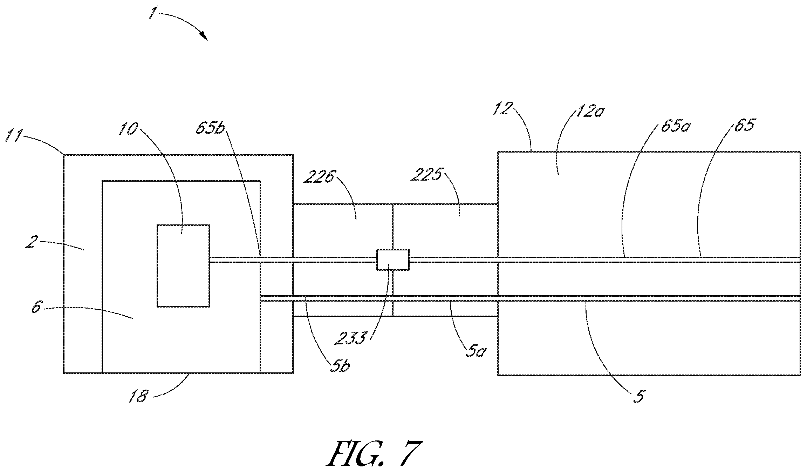

Figure 7 is a schematic diagram of a dental treatment apparatus or instrument 1 according to various embodiments, in which the pressure wave generator 10 comprises a laser device. Unless otherwise noted, components of Figure 7 may be same as or generally similar to like-numbered components of Figures 2A-2K, 3A-3C, 4A-4C, 5, or 6. As shown in Figure 7 and as explained above, the conduits 5a and 5b can deliver a treatment liquid (*e.g.,* a cleaning liquid) to the treatment region. Further, in Figure 7, an optical input line 65 can comprise a first optical input line 65a in the handpiece body 12a and a second optical input line 65b in the tip device. The optical input lines 65a, 65b can comprise optical fibers coupled by an optical coupler 233. In some embodiments, one or both of the input lines 65a and 65b can be a waveguide, an optical fiber, etc. The optical coupler 233 can be an optical fiber connector, a spring-loaded connector, an index matching material, a screw-type connecter, a snap-type connecter, a push-pull coupling, a bayonet connector, a keyed connector, a clip connector, or any other suitable type of optical coupler 233 for coupling the optical input lines 65a and 65b. In some embodiments, the pressure wave generator 10 can comprise a distal tip at a distal portion of the second input line 65b. For example, the distal fiber tip can comprise a conical tip, or any other suitably shaped optical fiber tip. Laser light can propagate along the input lines 65a, 65b and can be discharged into liquid retained in the chamber 6 through the distal tip of the pressure wave generator 10. In some embodiments, electromagnetic energy discharged into the liquid can create photoacoustic waves that propagate through the treatment region to treat the tooth. Although not shown in Figure 7, the fluid platform 2 of Figure 7 can also include a suction port 8 that conveys effluent or outgoing fluid out of the treatment region and chamber and to a waste reservoir along an outlet line 4. In addition, although not shown in Figure 7, the fluid platform 2 can comprise a vent 7 exposed to ambient air and in fluid communication with the outlet line 4 downstream of the suction port 8.

In various embodiments, the handpiece body 12a can include a proximal connector that connects to one or more conduits in fluid communication with a console or other device. The proximal connector can provide fluid, electric, and/or data communication with the conduits and the console. Additional details of portions of the treatment instrument 1 disclosed herein may be found throughout U.S. Patent No. 9,675,426, U.S. Patent No. 10,363,120, U.S. Patent No. 9,877,801, U.S. Patent No. 9,504,536, and U.S. Publication No. 2015/0044632. For example, similar to the devices shown in U.S. Patent No. 9,675,426 and U.S. Patent No. 10,363,120, the instrument 1 can be used to clean a root canal of a tooth. The tooth can comprise a molar tooth in some embodiments (*see, e.g.,* U.S. Patent No. 9,675,426). In other embodiments, the tooth can comprise an anterior or pre-molar tooth (*see, e.g.,* U.S. Patent No. 10,363,120). In other embodiments, the instrument 1 can be configured to clean a carious region on an exterior region of the tooth (*see, e.g.,* U.S. Publication No. 2015/0044632). In still other embodiments, the instrument 1 can be configured to fill or obturate a treatment region of a tooth, as explained in U.S. Patent No. 9,877,801.

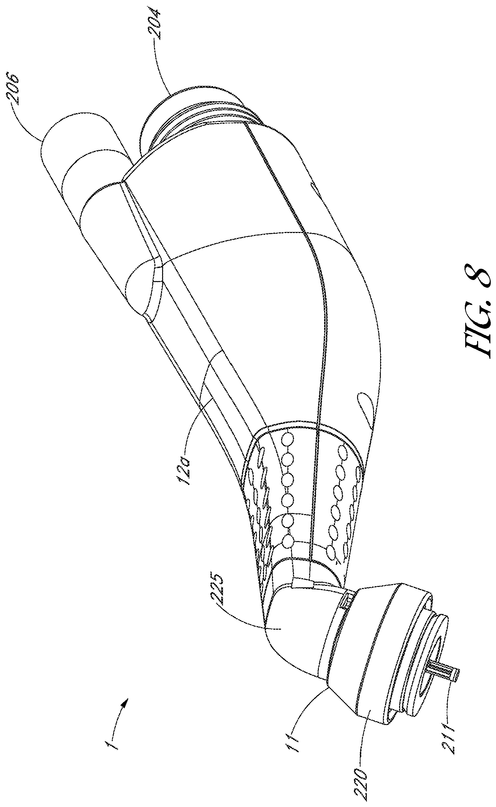

Figure 8 is a schematic front perspective view of a dental treatment instrument 1 according to various embodiments. Unless otherwise noted, components of Figure 8 may be same as or generally similar to like-numbered components of Figures 2A-2K, 3A-3C, 4A-4C, 5, 6, or 7. The dental treatment instrument 1 can include a handpiece body 12a and a treatment tip device 11 configured to removably connect to a distal portion or connector 225 of the handpiece body 12a. In various embodiments, therefore, the treatment tip device 11 can be connected to the handpiece body 12a before a treatment procedure. The clinician can then conduct the treatment procedure, such as a cleaning procedure or a filling procedure. After the treatment procedure, the clinician can remove the treatment tip device 11 from the handpiece body 12a. In various embodiments, the tip device 11 can be a single-use device such that the tip device 11 is disposed after a single use. In other embodiments, however, the tip device 11 can be used more than once. In various embodiments, the handpiece body 12a can be used in multiple procedures, *e.g.,* a predetermined number of procedures. Beneficially, providing a disposable tip device 11 in conjunction with a generally reusable handpiece body 12a can enable the clinician to reduce costs associated with disposing the handpiece body 12a after a single use.

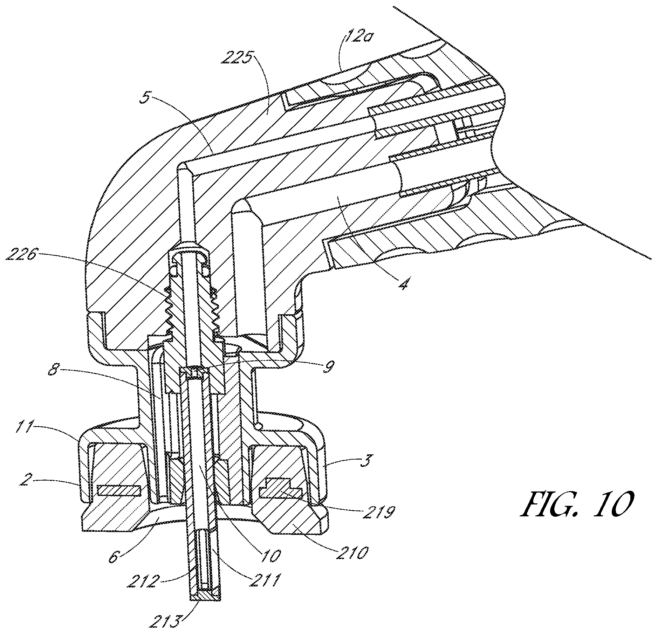

The handpiece body 12a can include a proximal connector 204 and a proximal connector 206 that connect to one or more conduits (not shown) in fluid communication with a console or other device (also not shown). The proximal connectors 204 and 206 can provide fluid, electric, and/or data communication with the conduits and the console. Additional details of portions of the treatment instrument 1 disclosed herein may be found throughout U.S. Patent No. 9,675,426, U.S. Patent No. 10,363,120, U.S. Patent No. 9,877,801, U.S. Patent No. 9,504,536, and U.S. Publication No. 2015/0044632. For example, similar to the devices shown in U.S. Patent No. 9,675,426 and U.S. Patent No. 10,363,120, the instrument 1 can be used to clean a root canal of a tooth. The tooth can comprise a molar tooth in some embodiments (*see, e.g.,* U.S. Patent No. 9,675,426). In still other embodiments, the instrument 1 can be configured to fill or obturate a treatment region of a tooth, as explained in U.S. Patent No. 9,877,801. In some embodiments, a portion of a cover member 220 can be provided at the connector 225 as shown in Figure 8. In other embodiments (see Figure 10), there may be no cover member.

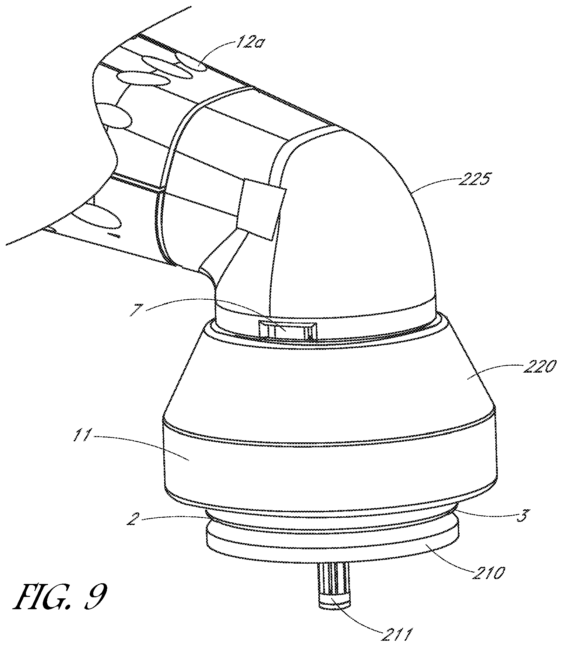

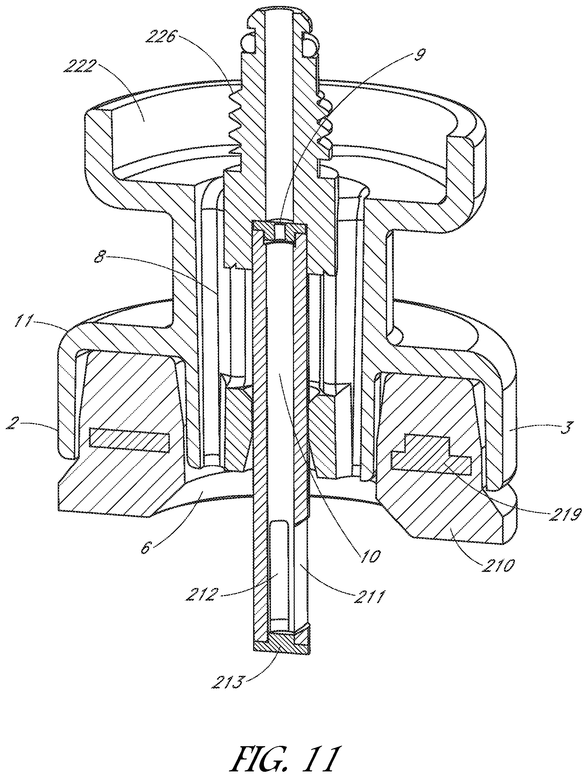

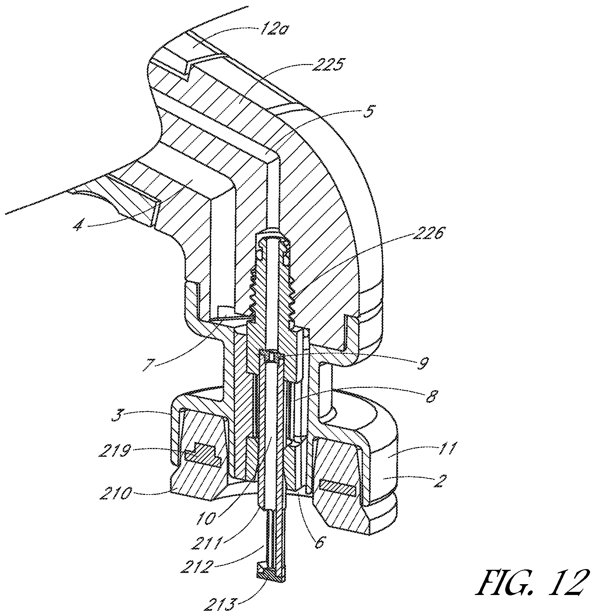

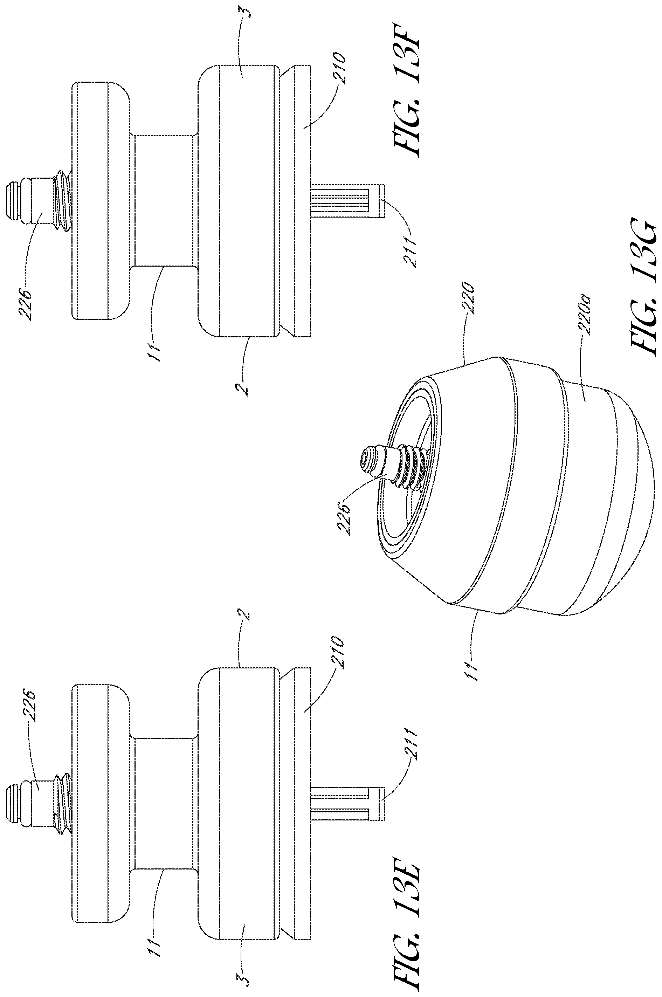

Figure 9 is a schematic magnified perspective view of the connector 225 of the treatment instrument 1 shown in Figure 8. Figure 10 is a schematic perspective sectional view of the connector 225 of the treatment instrument 1. Figure 11 is a schematic perspective sectional view of the tip device 11. Figure 12 is a schematic partial sectional view of the connector 225 of the instrument that illustrates one or more vents 7 that can be provided in various embodiments. Figure 13A is a schematic front top perspective view of the tip device 11. Figure 13B is a schematic rear bottom perspective view of the tip device 11 of Figure 13A. Figure 13C is a schematic top view of the tip device 11 of Figure 13A. Figure 13D is a schematic bottom view of the tip device 11 of Figure 13A. Figure 13E is a schematic front view of the tip device 11 of Figure 13A. Figure 13F is a schematic left side view of the tip device 11 of Figure 13A. Figure 13G is a schematic perspective view of a tip device 11 in which an additional cover member 220a is provided at an exterior surface of the tip device 11. In various embodiments, for example, the cover member 220a can be provided to protect and/or seal the tip device 11 when the instrument is not in use. In some embodiments, the communications device 219 can be embedded within the cover member 220a.

The tip device 11 can include a fluid platform 2 sized and selected to be positioned against a treatment region of a tooth, *e.g.,* over an access opening that provides access to a root canal of the tooth. The fluid platform 2 can include a fluid retainer or cap 3 and a contact member 210 configured to contact a portion of the treatment region. During use, the clinician can press the contact member 210 (which can comprise a flexible member, sponge, etc.) on the treatment region so as to substantially seal the treatment region. In some embodiments, the clinician can adhere or otherwise connect the fluid platform 2 to the treatment region so as to substantially seal the treatment region. The fluid platform 2 can at least partially define a chamber 6 in which fluid can be retained.

The fluid platform 2 can include or be coupled to a pressure wave generator 10 configured to generate pressure waves and/or fluid motion at the treatment region of the tooth, including at locations remote from the pressure wave generator 10. In various embodiments, the pressure wave generator 10 can be used to clean a treatment region (*e.g.,* root canal) of a tooth. In various embodiments, the pressure wave generator 10 can be used to fill a treatment region (*e.g.,* root canal) of a tooth. In the illustrated embodiment, the pressure wave generator 10 comprises a liquid jet device. In other embodiments, the pressure wave generator 10 can comprise other types of pressure wave generators described in, *e.g.,* U.S. Patent No. 9,675,426, U.S. Patent No. 10,363,120, U.S. Patent No. 9,877,801, U.S. Patent No. 9,504,536, and U.S. Publication No. 2015/0044632, such as a laser device. The pressure wave generator 10 can be arranged to generate broadband pressure waves at multiple frequencies, as explained in U.S. Patent No. 9,675,426, U.S. Patent No. 10,363,120, U.S. Patent No. 9,877,801, U.S. Patent No. 9,504,536, and U.S. Publication No. 2015/0044632, which can be beneficial in cleaning or filling the treatment region. In various embodiments, degassed treatment liquids can be used in cooperation with the pressure wave generator 10, for example, to enhance cleaning of the treatment region.

The liquid jet device of the pressure wave generator 10 disclosed herein can include a nozzle 9 and a guide tube 211 extending distal the nozzle 9. An inlet line 5 in the handpiece body 12a can supply treatment liquid to the nozzle 9. The nozzle 9 can pressurize the liquid so as to form a coherent, collimated liquid jet. The guide tube 211 can extend through the chamber 6 and can have a distal end disposed distal the contact member 210. During treatment, the guide tube 211 can extend into the tooth, for example, during a root canal treatment. The liquid jet can pass along a channel of the guide tube 211 and can impinge upon an impingement plate 213 at the distal end of the guide tube 211. One or a plurality of openings 212 can provide fluid communication between the jet and the treatment region. Additional details of the liquid jet device can be found, for example, in U.S. Patent No. 9,675,426. The jet can interact with liquid in the chamber 6 and/or in the treatment region to generate pressure waves and fluid motion in the treatment region. The generated pressure waves and fluid motion can be used to clean the treatment region in various procedures, such as those described in Patent No. 9,675,426, U.S. Patent No. 10,363,120, and U.S. Publication No. 2015/0044632. In some arrangements, the generated pressure waves and fluid motion can be used to fill the treatment region.

The fluid platform 2 can further include one or more suction ports 8 in fluid communication with a suction pump (which, for example, may be located in the console). The port(s) 8 can be disposed adjacent to or at least partially around the guide tube 211. When the suction pump is activated, liquid can be drawn out of the chamber 6, through the port(s) 8 and to an outlet line 4 in the handpiece body 12a, which can convey the removed liquid to a waste container, which may be located in the console for example. In addition, as shown in Figures 9 and 12, one or more vents 7 can provide fluid communication between ambient air and the line 4. For example, as shown in Figure 11, a second upper chamber 222 can provide fluid communication between the vent(s) 7 and liquid outflow that flows through the port(s) 8 and the outlet line 4. The vent(s) 7 can beneficially provide a pressure regulation function, as explained in, e.g., Patent No. 9,675,426, U.S. Patent No. 10,363,120, and U.S. Publication No. 2015/0044632.

In some embodiments, the tip device 11 can comprise a communications device 219 (such as a radio frequency identification, or RFID, device). The communications device 219 can wirelessly or otherwise communicate with a reader, which can comprise processing circuitry configured to monitor a status of the tip device 11 and/or the treatment procedure. In various embodiments, the system can be configured to ensure that only authorized tip devices 11 may be used with the handpiece body 12a. In various embodiments, the system can be configured to ensure that the tip device 11 is used in only a single procedure. In other embodiments, the system can be configured to determine in how many procedures the tip device 11 has been used. The communications device 219 can serve various other functions, including those described in connection with the RFID devices disclosed in U.S. Patent No. 9,504,536.

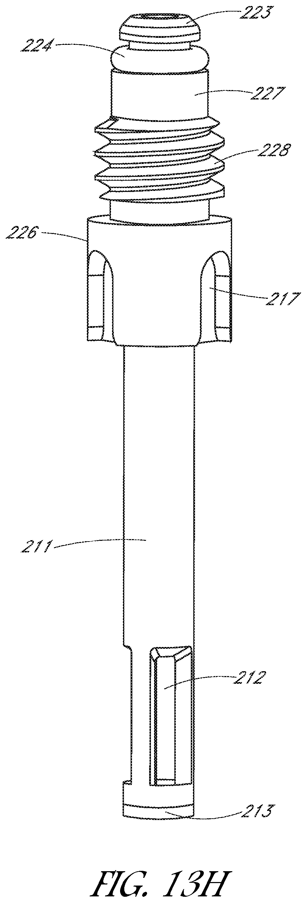

Figure 13H is a schematic side view showing the connector 226 and guide tube 211. As shown in Figures 10, 11, and 13H, the tip device 11 can comprise a connector 226 which can removably connect to the connector 225 of the handpiece body 12a in any suitable manner. In the illustrated embodiment, for example, the connector 226 can comprise an upwardly extending flange 227 having threads 228 on an external surface thereof. The threads on the connector 226 can threadably engage with corresponding internal threads at the connector 225 of the handpiece body 12a. Thus, the clinician can thread the tip member 11 onto the connector 225 of the handpiece body 12a before the procedure, and can unthread the tip member 11 from the connector 225 after the procedure. It should be appreciated that in some embodiments, the connector 226 can have internal threads which engage with external threads of the handpiece body 12a. In other embodiments, different types of connectors 226 can be used, such as snap-fit connectors, etc.

As shown in Figure 13H, the threads 228 may be offset distally from a proximal end 223 of the connector 226, such that the proximal end 223 can be inserted into an opening of the handpiece body 12a by an insertion amount, and the threads 228 can engage with the corresponding threads of the handpiece body 12a. A seal 224 (such as an o-ring) can provide a fluid seal between the handpiece body 12a and the tip device 11. A transition portion 217 can mechanically couple the connector 226 and the guide tube 211. In some embodiments, the transition portion 217, the connector 226, and the guide tube 211 can be separate members that are mechanically connected to one another (*e.g.,* adhered, welded, etc.). In other embodiments, two or more of the transition portion 217, connector 226, and the guide tube 211 can be integrally formed.

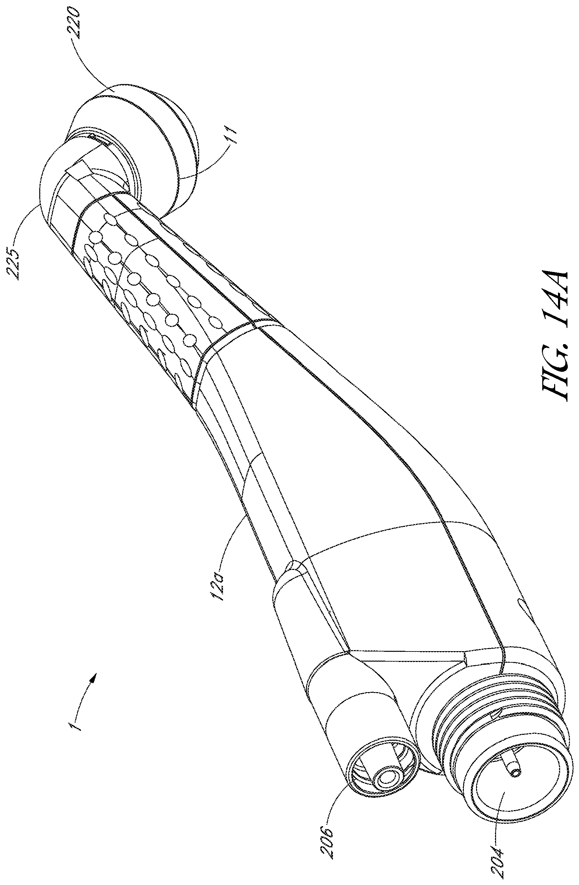

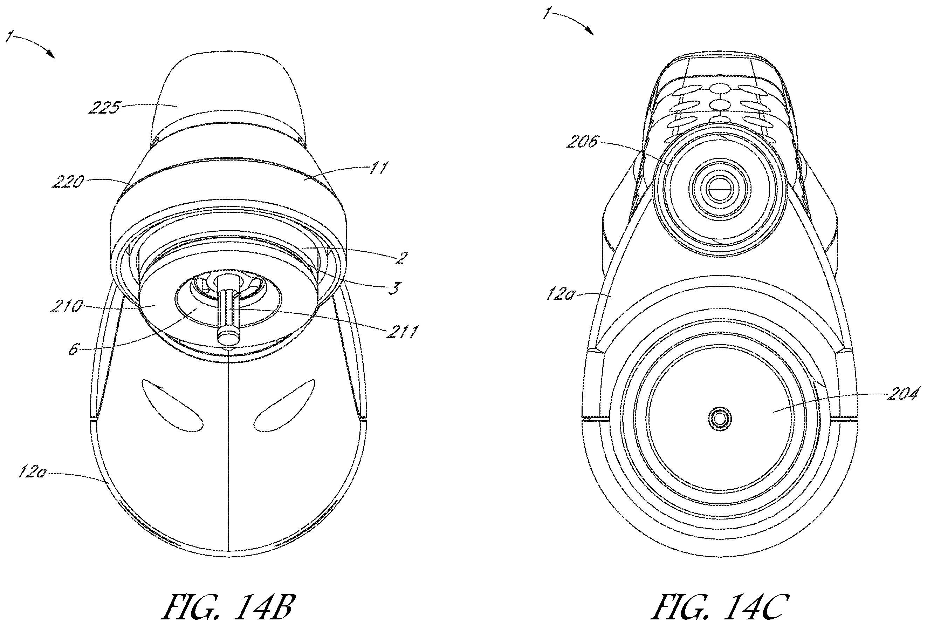

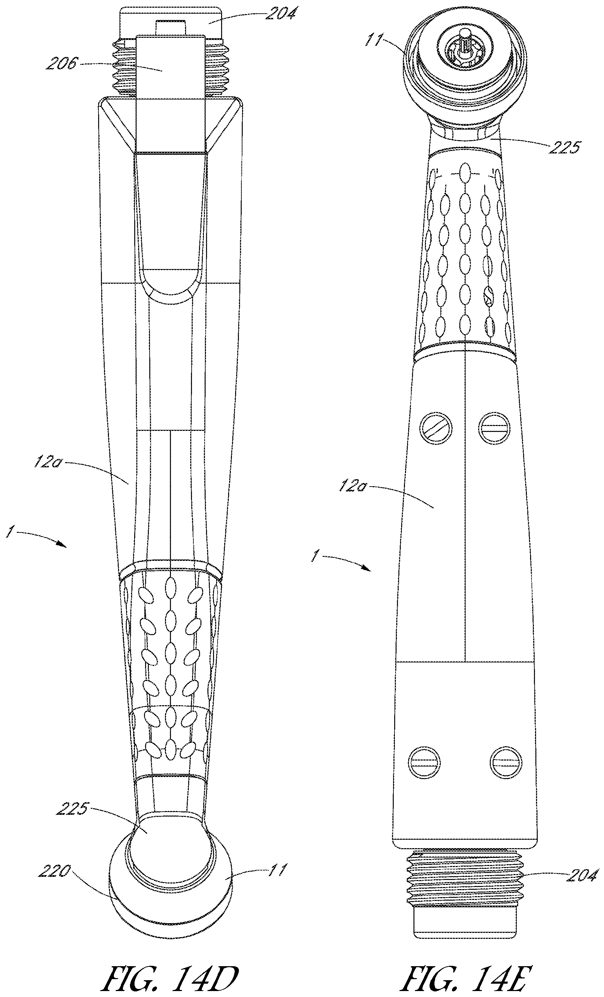

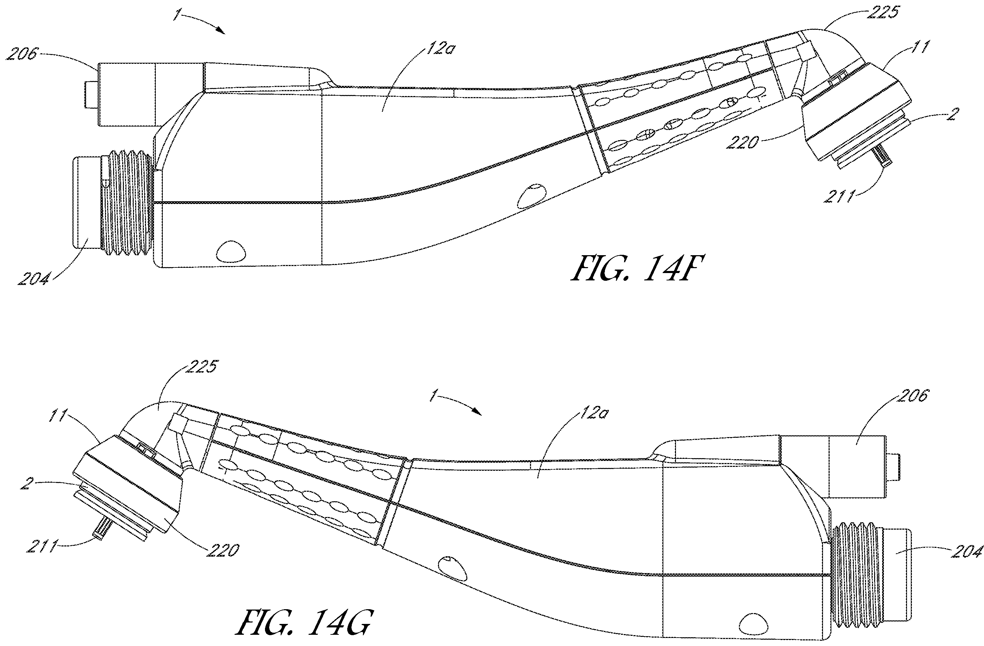

Figure 14A is a schematic rear perspective view of the dental treatment instrument 1 shown in Figure 8. Figure 14B is a schematic front view of the dental instrument 1 shown in Figure 8. Figure 14C is a schematic rear view of the dental instrument 1 shown in Figure 8. Figure 14D is a schematic top view of the dental instrument 1 shown in Figure 8. Figure 14E is a schematic bottom view of the dental instrument 1 shown in Figure 8. Figure 14F is a schematic left side view of the dental instrument 1 shown in Figure 8. Figure 14G is a schematic right side view of the dental instrument 1 shown in Figure 8.

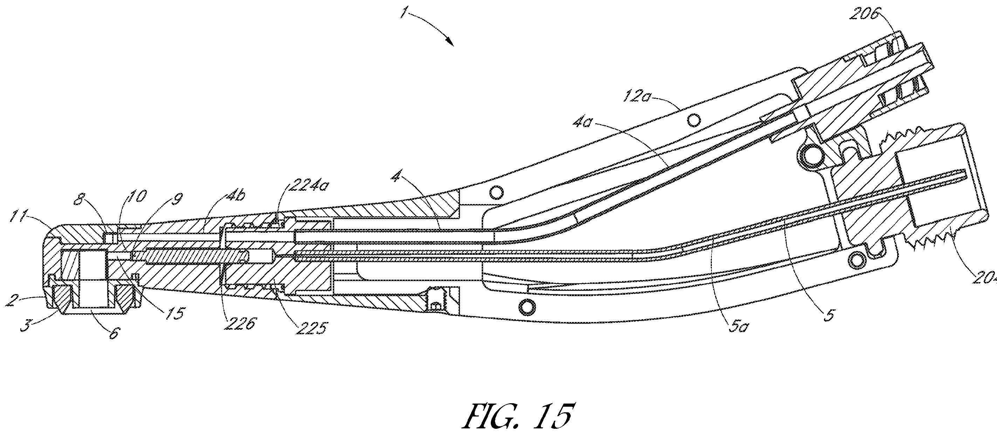

Figure 15 is a schematic cross-sectional view of a dental treatment apparatus or instrument 1 according to various embodiments. Unless otherwise noted, components of Figure 15 may be same as or generally similar to like-numbered components of Figures 2A-2K, 3A-3C, 4A-4C, 5, 6, 7, or 8-14G. The dental treatment instrument 1 can include a handpiece body 12a and a treatment tip device 11.

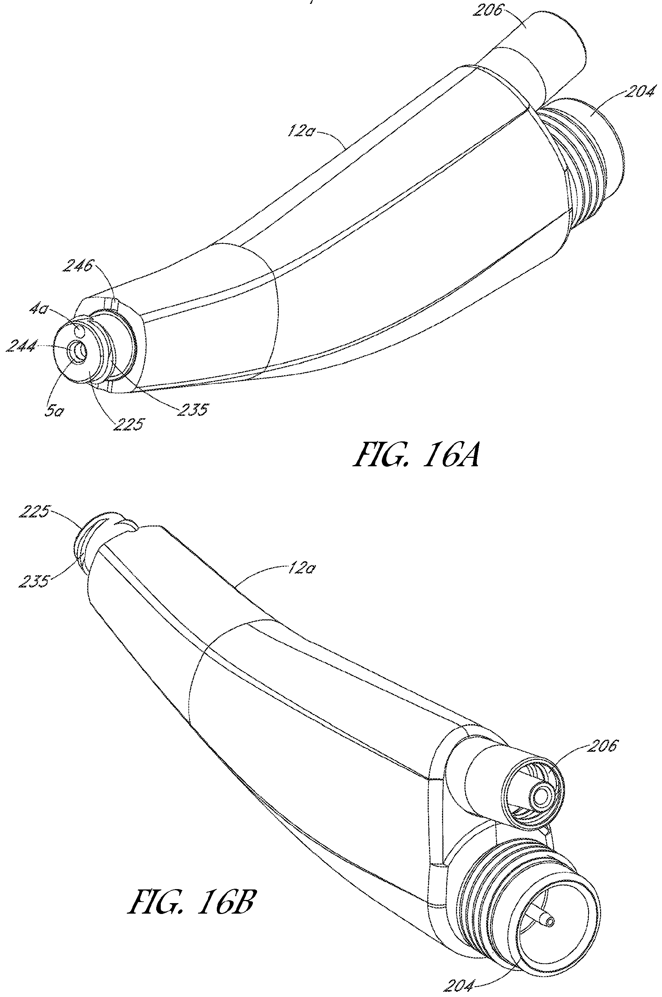

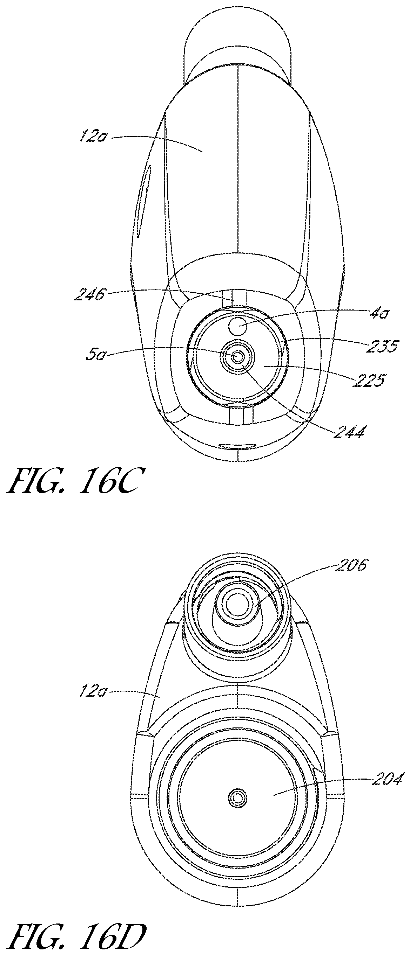

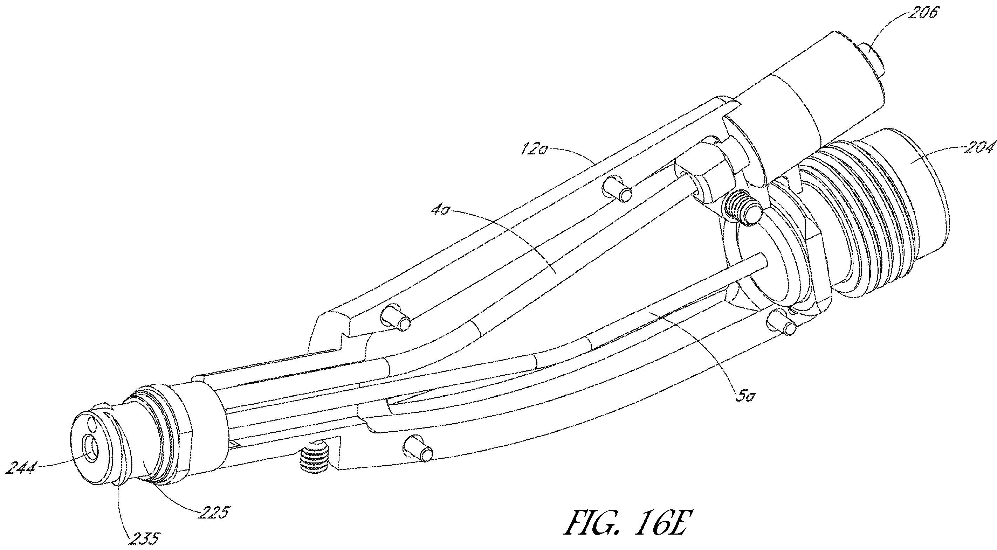

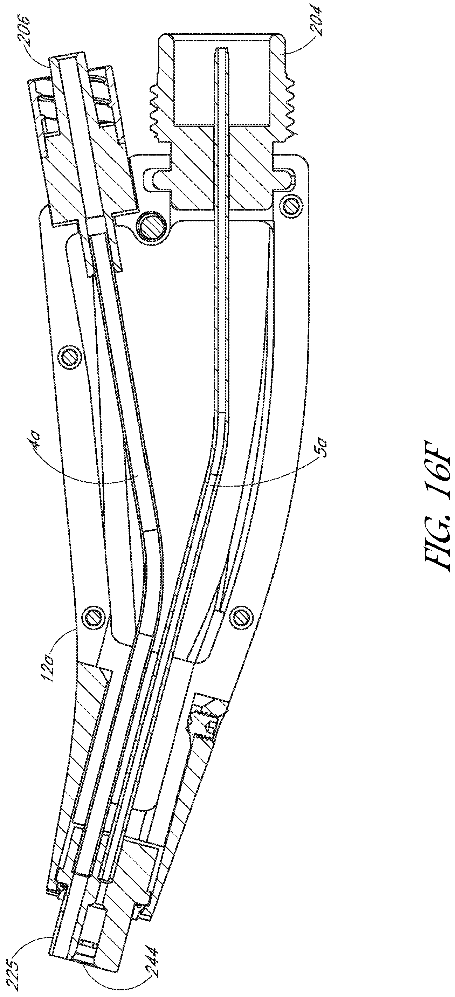

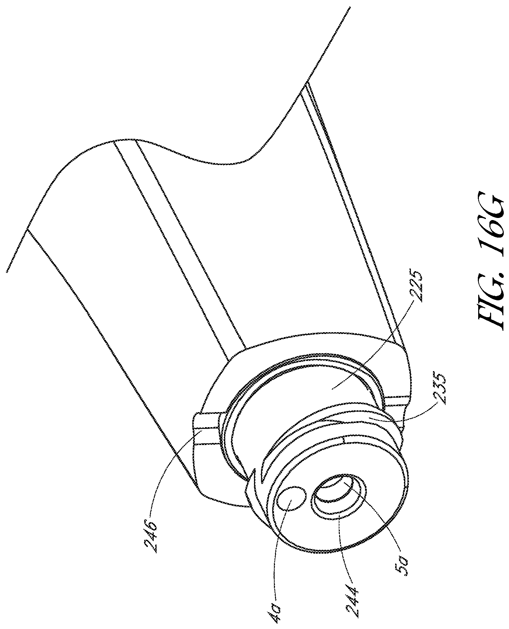

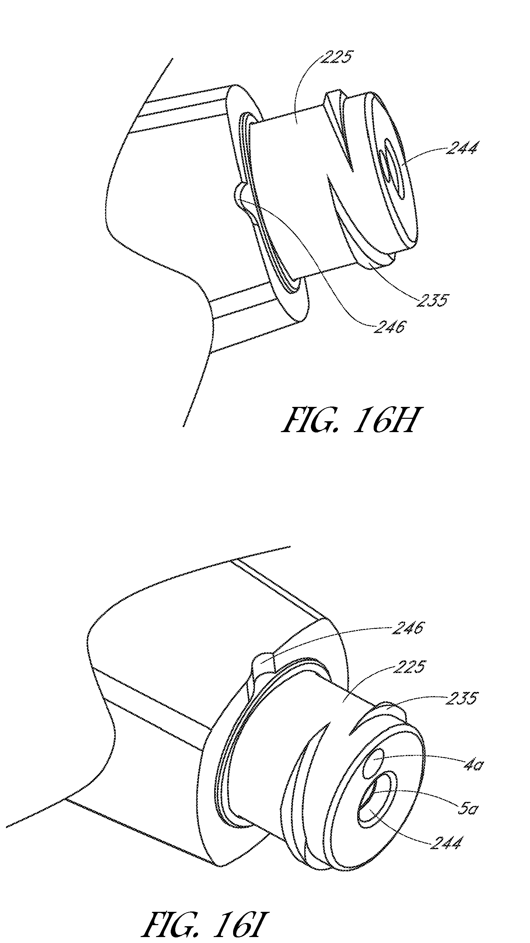

Figure 16A is a schematic front perspective view of the handpiece body 12a. Figure 16B is a rear perspective view of the handpiece body 12a. Figure 16C is a front view of the handpiece body 12a. Figure 16D is a rear view of the handpiece body 12a. Figure 16E is schematic perspective sectional view of the handpiece body 12a. Figure 16F is a side cross-sectional view of the handpiece body 12a. Figure 16G is a schematic top-right perspective view of a distal portion of the handpiece body 12a. Figure 16H is a schematic top perspective view of the distal portion of the handpiece body 12a. Figure 16I is a schematic top-left perspective view of the distal portion of the handpiece body 12a.

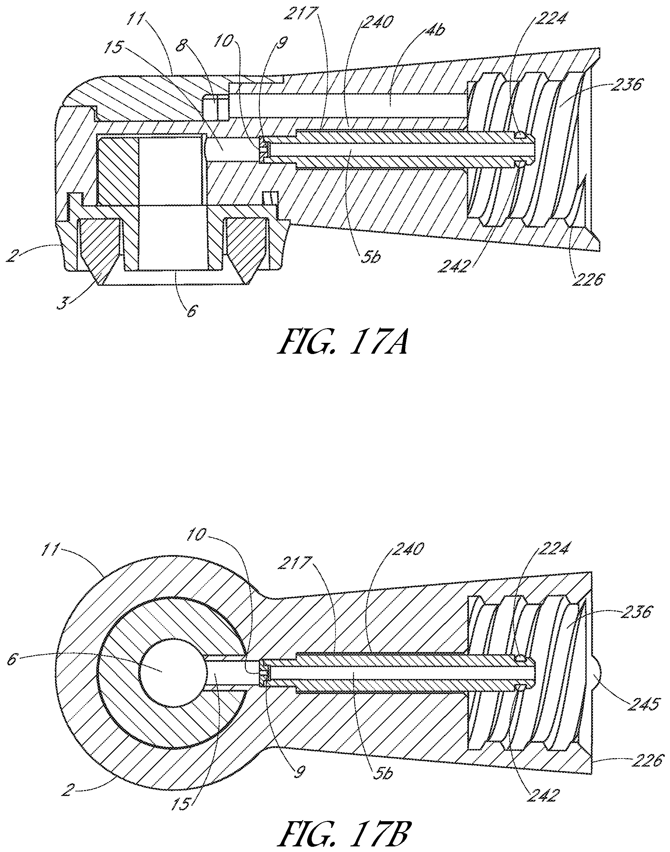

Figure 17A is a cross-sectional side view of the tip device 11. Figure 17B is a cross-sectional top view of the tip device 11. The treatment tip device 11 of Figures 15 and 17A-17B may include a pressure wave generator 10 comprising a nozzle 9 that is positioned in a generally similar manner as that shown in the embodiments shown in Figures 2A-2K and 3A-3C. For example, the nozzle 9 can direct a liquid jet along a jet axis that passes through a central region of the chamber 6 across the chamber 6, *e.g.,* the jet axis can intersect the central axis of the chamber. The jet axis may be substantially perpendicular to the central axis. Further, the treatment tip device 11 of Figure 15 may comprise one or a plurality (*e.g.,* two) of suction ports 8 at an upper wall 17 of the chamber 6 at or near a sidewall 13 of the chamber 6. The suction ports 8 can be disposed closer to the sidewall than to the central axis as explained above. As explained above, the suction ports 8 can comprise elongated, curved suction ports. As explained above, the treatment tip device 11 can be configured to clean a root canal of any suitable type of tooth (*e.g.,* molar, pre-molar, anterior). The treatment tip device 11 can additionally or alternatively be used to clean a carious region on an exterior surface of the tooth. The treatment tip device 11 can additionally or alternatively be used to fill the treatment region. The pressure wave generator 10, chamber, suction ports 8, and other features of Figures 17A-17B may be configured in the same manner, or in a generally similar manner, as the components in Figures 2A-4C.

As shown in Figure 15, the tip device 11 can be removably connected to a distal portion of the handpiece body 12a. In various embodiments, the handpiece body 12a can include a connector 225 that removably connects the handpiece body 12a to the tip device 11. The tip device 11 can include a connector 226 that removably connects the tip device 11 to the handpiece body 12a. The connector 225 can couple with the connector 226 to removably couple the tip device 11 to the handpiece body 12a.

As shown in Figure 16A, the connector 225 includes external threads 235 configured to engage corresponding internal threads 236 of the connector 226, shown in Figures 17A-B. Thus, a clinician can thread the tip device 11 onto connector 225 of the handpiece body 12a before a treatment procedure, and can unthread the tip member 11 from the connector 225 after the treatment procedure.

As shown in Figures 16A, 16B, 16E, and 16G-16I, the external threads 235 can be in the form of a double helix thread. In other words, the external threads 235 can include two thread features which have starts oriented approximately 180° apart. This configuration allows the tip device 11 to be threaded onto the handpiece body 12a and optionally started in a choice of two different starting orientations. The threads 235 can be designed such that a single revolution to attached the tip device 11 to the handpiece body 12a so that the tip device 11 will face in the same orientation after connection as the orientation when the threads are first engaged. For example, a first starting orientation can allow for a final orientation in which the tip device is oriented in a downward direction, as shown in Figure 15, and a second starting orientation can allow for a final orientation in which the tip device 11 is oriented in an upward direction opposite of the orientation of Figure 15. Beneficially, therefore, the clinician can start threading the tip device 11 onto the handpiece 12a in the same configuration as the final connected state, so as to easily enable the clinician to select the desired orientation of the tip device 11.

In various embodiments, therefore, the tip device 11 can be connected to the handpiece body 12a before a treatment procedure. After the tip device 11 is connected to the handpiece body 12a, a clinician can conduct a treatment procedure, such as a cleaning procedure. After the treatment procedure, the clinician can remove the treatment tip device 11 from the handpiece body 12a.

In various embodiments, the handpiece body 12a can be used in multiple procedures, e.g., a predetermined number of procedures. In various embodiments, the handpiece body 12a can be configured to connect to multiple tip devices 11. In some embodiments, the handpiece body 12a can be configured to connect to multiple tip devices 11 having the same configuration. In other embodiments, the handpiece body 12a can be configured to connect to multiple tip devices 11 having different configurations. For example, in some embodiments, the handpiece body 12a can connect to multiple tip devices 11 configured for treatment of different types of teeth, *e.g.,* a first tip device for treatment of a molar tooth and a second tip device for treatment of an anterior or pre-molar tooth. In some embodiments, the handpiece body 12a can connect to multiple tip devices configure for treatment of different types of treatment regions, *e.g.,* a first tip device for treatment of a root canal and a second tip device for treatment of an external carious region.

In various embodiments, the tip device 11 can be disposable. Beneficially, providing a disposable tip device 11 in conjunction with a generally reusable handpiece body 12a can enable the clinician to reduce costs associated with disposing the handpiece body 12a after a single use.

In various embodiments, the tip device 11 can include a fluid platform 2 configured to be positioned against a region of a tooth. In some embodiments, the fluid platform 2 can be sized and selected to be positioned against a treatment region of a tooth, *e.g.* , over an access opening that provides access to a root canal of the tooth (*see,* Figure 1A). In other embodiments, the fluid platform 2 can be positioned over a carious region on an external surface of the tooth (*see* Figure 1B).

The fluid platform 2 can at least partially define a chamber 6 to be in fluid communication with a treatment region of a tooth. In some embodiments, the fluid platform 2 can be sized to be applied to a tooth to substantially retain fluid in the chamber 6 during a treatment procedure. In some embodiments, the treatment region can be a carious region. In other embodiments, the treatment region can be a root canal. In some embodiments, at least a portion of the chamber 6 is positioned outside of the tooth when the fluid platform is positioned against a region of the tooth.

In some embodiments, the fluid platform 2 can be sized to be applied to a molar tooth to substantially retain fluid in the chamber 6 during a treatment procedure. In some embodiments, the fluid platform can 2 be sized to be applied to an anterior or pre-molar tooth to substantially retain fluid in the chamber 6 during a treatment procedure.

In some embodiments, the fluid platform 2 is sized to be positioned against and at least partially seal against an external surface of the tooth over a carious region such that the chamber 6 defines an enclosed volume around the carious region at the external surface of the tooth.

In some embodiments, the fluid platform 2 can include a fluid retainer or cap and a contact member configured to contact a portion of the treatment region. During use, the clinician can press the contact member (which can comprise a flexible member, sponge, etc.) on the treatment region so as to substantially seal the treatment region. In some embodiments, the clinician can adhere or otherwise connect the fluid platform 2 to the treatment region so as to substantially seal the treatment region.

In various embodiments the tip device 11 can include a pressure wave generator 10 configured to generate pressure waves and/or fluid motion in fluid provided at the treatment region of the tooth. In some embodiments, the pressure wave generator can generate pressure waves and/or fluid motion at locations remote from the pressure wave generator 10. In some embodiments, the pressure wave generator 10 can be coupled to the platform 2.

As shown in the illustrated embodiment, the pressure wave generator 10 includes a liquid jet device. The liquid jet device can produce a liquid jet that can interact with liquid in the chamber 6 and/or in the treatment region to generate pressure waves and fluid motion in the treatment region. The generated pressure waves and fluid motion can be used to clean the treatment region in various procedures, such as those described in Patent No. 9,675,426, U.S. Patent No. 10,363,120, and U.S. Publication No. 2015/0044632. In some arrangements, the generated pressure waves and fluid motion can be used to fill the treatment region, such as procedures described in U.S. Patent No. 9,877,801. The pressure wave generator 8 can be arranged to generate broadband pressure waves at multiple frequencies, as explained in U.S. Patent No. 9,675,426, U.S. Patent No. 10,363,120, U.S. Patent No. 9,877,801, U.S. Patent No. 9,504,536, and U.S. Publication No. 2015/0044632, which can be beneficial in cleaning or filling the treatment region. In various embodiments, degassed treatment liquids can be used in cooperation with the pressure wave generator 8, for example, to enhance cleaning of the treatment region.

The liquid jet device of the pressure wave generator 10 includes a nozzle 9. The nozzle 9 is positioned along an inlet line 5. As shown in Figure 15, the inlet line 5 is formed by a conduit 5a of the handpiece body 12a and a conduit 5b of the tip device 11 in communication when the tip device 11 is coupled to the handpiece body 12a.

As shown in Figure 17A, a connector 240 can be positioned within or adjacent the guide channel 15 of the tip device 11. The inlet line conduit 5b can be defined by an inner wall of the connector 240. The connector 240 can extend into the conduit 5a of the handpiece body 12a to form a fluid tight connection between the conduit 5a and the conduit 5b within the inlet 5. An o-ring 224 can be positioned within an o-ring gland 242 at a proximal end of the connector 240 to form a fluid tight seal between the conduit 5a and the conduit 5b when the connector 240 is positioned within the handpiece 11. As shown in the illustrated embodiment, the nozzle 9 can be positioned at the distal end of the connector 240 at a distal end of the conduit 5b. In some embodiments, the inlet line 5 can be centrally located within the connectors 225 and 226 to facilitate the threading of the tip device 11 onto the handpiece body 12a while the connector 240 is positioned within the conduit 5a. Such an arrangement may also be used with other embodiments of connectors 225 and 226 that couple through rotation.

As shown in Figure 17A, the connector 240 can comprise a proximal end generally in the shape of a barbed connector or spike. The connector 240 can include a transition section 217 extending between the proximal end and the distal end. The transition section can be generally cylindrical in shape.

As shown in Figure 16F, a distal end of the conduit 5a can include a chamfered bore 244 for receiving the connector 240. As described herein, the proximal end of the connector 240 can be generally in the shape of a barbed connector or spike. The proximal end of the connector 240 may be tapered to for coupling within the chamfered bore 244.

The illustrated embodiment does not depict a connector 240 between the conduits 4a and 4b. However, it is contemplated that the connector 240 or a similar connector could be employed in other embodiments, for example, when a quick connection coupling between the handpiece body 12a and tip device 11 is employed.

The tip device 11 can include one or more ports 8 to convey fluid from the chamber 6. The ports 8 can be in communication with a suction pump (which, for example, may be located in the console). When the suction pump is active, liquid can be drawn out of the chamber 6, through the port(s) 8 and to an outlet line 4, which can convey the removed liquid to a waste container, which may be located in the console for example. The outlet line 4 includes a conduit 4a within the handpiece body 12a in communication with a conduit 4b of the tip device 11 when the tip device 11 is coupled to the handpiece body 12a. As shown in Figure 15, a seal 224a can form a fluid seal between the tip device 11 and the handpiece body 12a to prevent leakage of fluid from the fluid outlet line 4. The seal 224a can be a face seal. In some embodiments, the seal 224a includes a gasket or an o-ring. In some embodiments the seal 224a can be coupled to the handpiece body 12a. In other embodiments, the seal 224a can be coupled to the tip device 11.

In various embodiments, the tip device 11 can include one or more vents (not shown) configured to permit ambient air to be drawn into the outlet line 4 downstream of the fluid port 8. The vent(s) can beneficially provide a pressure regulation function, as explained in, e.g., Patent No. 9,675,426, U.S. Patent No. 10,363,120, and U.S. Publication No. 2015/0044632.

In the illustrated embodiment, the dental treatment instrument 1 includes a locking mechanism defined by one or more protrusions 245 extending from the tip device 11 and one or more notches recesses 246 extending within the handpiece body 12a. The protrusion(s) 245 can couple with the recess(es) 246 to secure the tip device 11 in a fixed orientation relative to the handpiece body 12a when the tip device 11 is coupled to the handpiece body.

In various embodiments, the handpiece body 12a can include a proximal connector 204 that connects to the fluid inletline 5 in fluid communication with a console or other device (also not shown). The handpiece body 12a also includes a proximal connector 206 that connects the fluid outlet line 4 in fluid communication with a console or other device.

### IV. ADDITIONAL EXAMPLES OF REMOVABLE TIP DEVICES

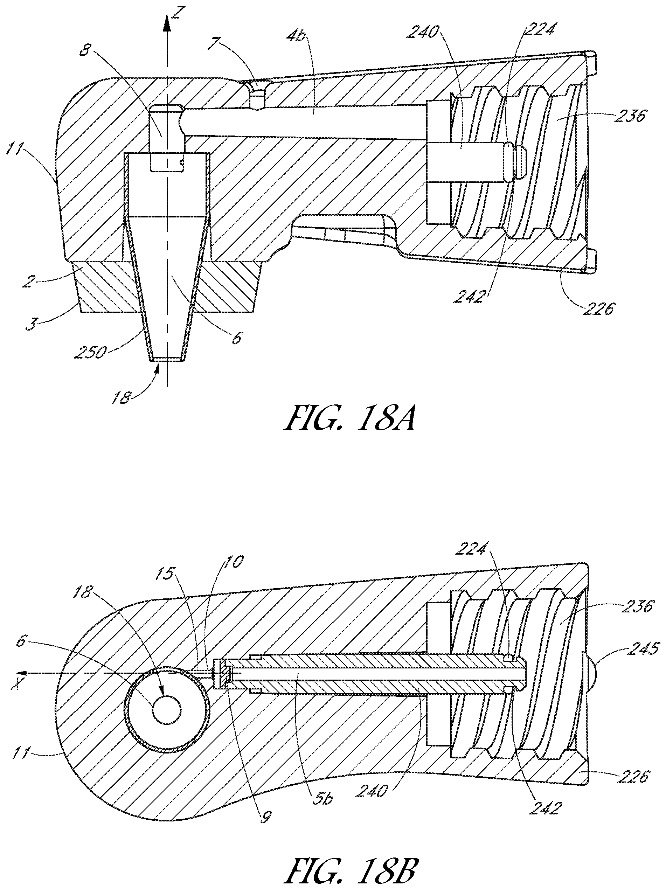

Figures 18A and 18B illustrate a schematic side cross-sectional view and a schematic top cross-sectional view of a tip device 11 according to various embodiments. Unless otherwise noted, the components of the tip device of Figure 18A may be same as or generally similar to like-numbered components of the tip device 11 of Figures 15-17B. For example, the tip device 11 includes connector 226 having internal threads 236 that can couple to internal threads of a handpiece body, such as external threads 235 of the handpiece body 12a. The tip device 11 also includes a fluid platform 2 that defines a chamber 6 to be positioned against a region of the tooth. A pressure wave generator 10 can be provided to generate pressure waves and fluid motion at the treatment region. The pressure wave generator can include a liquid jet having a nozzle 9 to supply liquid to the chamber 6. A suction port 8 can draw fluid from the chamber 6. The pressure wave generator 10 can be disposed outside the tooth during a treatment procedure. The tip device 11 can also include a connector 240 can be positioned within a conduit 5b forming part of an inlet line 5.

Unlike the embodiment of Figures 15-17B, the liquid introduced into the chamber 6 in the embodiment of Figures 18A-B can be introduced eccentrically (*e.g.,* off-center) such that the jet axis *X* is appreciably offset relative to the central axis *Z* of the chamber 6. The introduction of the liquid can generate a swirling motion that moves down the chamber 6 and to the treatment region. Moreover, as shown in Figures 18A-18B, the suction port 8 can be centrally located such that the central axis *Z* passes through the suction port 8 and the access port 18. Effluent or outgoing liquid can be drawn within or inside the swirling influent flow and can exit the chamber 6 by way of the suction port 8.

Further, unlike the embodiment of Figures 15-17B, the tip device 11 of Figures 18A-B includes a frusto-conical end 250. In some embodiments, the frusto-conical end 250 can be configured to be positioned within an access opening of the tooth during a treatment procedure.

The tip device 11 can be used to treat a root canal or a carious region on the tooth. Additional details of a treatment device that generates such a swirling profile may be found in U.S. Patent No. 10,363,120.

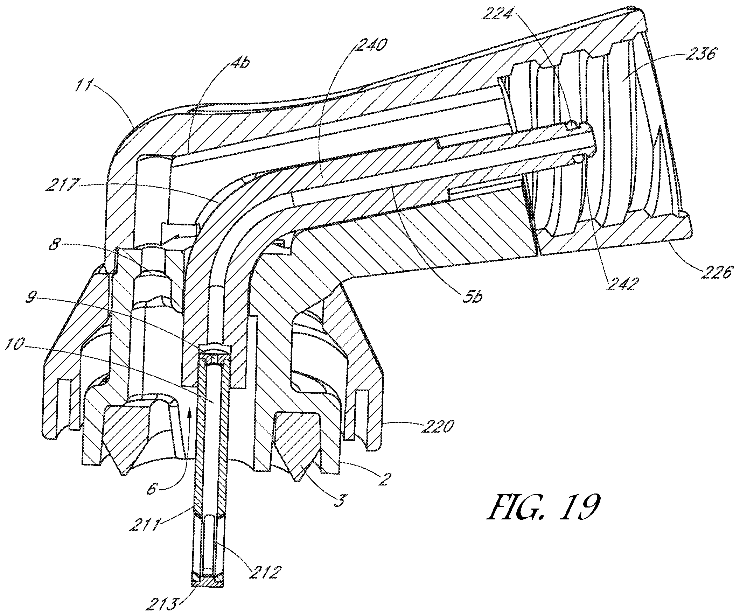

Figure 19 illustrates a schematic side cross-sectional view of a tip device 11 according to various embodiments. Unless otherwise noted, the components of the tip device 11 of Figure 18A may be same as or generally similar to like-numbered components of the tip device 11 of Figures 8-14 and/or Figures 15-17B. For example, the tip device 11 includes connector 226 having internal threads 236 that can couple to internal threads of a handpiece body, such as external threads 235 of the handpiece body 12a. The tip device 11 also includes a fluid platform 2 that defines a chamber 6 to be positioned against a region of the tooth. A pressure wave generator 10 can be provided to generate pressure waves and fluid motion at the treatment region. The pressure wave generator can include a liquid jet device having a nozzle 9 and a guide tube 211 to supply liquid to the chamber 6. A suction port 8 can draw fluid from the chamber 6. In some embodiments, the suction port 8 can comprise an annular port disposed about the guide tube 211. The guide tube 211 can extend through and outside the chamber 6. The tip device 11 can be configured to treat, *e.g.,* a root canal of a molar tooth. During a treatment procedure, the guide tube 211 can extend into a cavity of the tooth (*e.g.,* into a pulp chamber of the tooth). A vent can also be provided in the tip device 11 in a manner generally similar to that described above.

The tip device 11 can also include a connector 240 positioned within a conduit 5b forming part of an inlet line 5. However, unlike the connector 240 of Figures 15-17B, the connector 240 of Figure 19 is coupled to the guide tube 211 at a distal end of the connector 240. The transition section 217 is also generally curved.

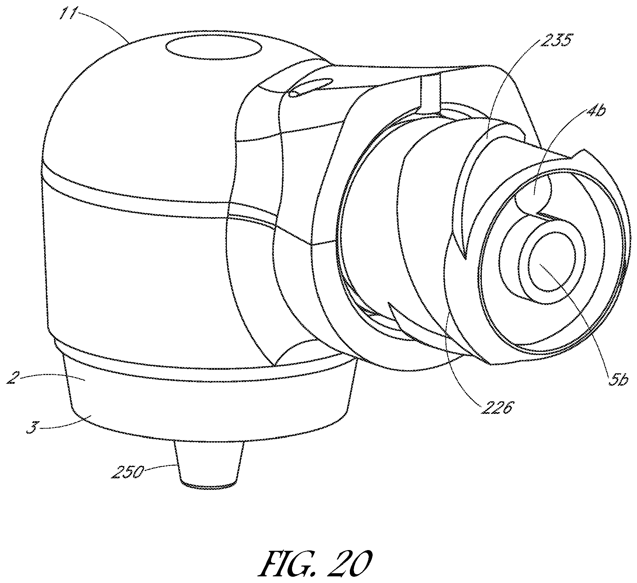

Figure 20 illustrates a schematic rear perspective view of a tip device 11 according to various embodiments. Unless otherwise noted, the components of the tip device of Figure 20 may be same as or generally similar to like-numbered components of the tip device 11 of Figures 18A-B. Unlike the tip device of Figures 18A-B, the connector 226 includes external threads 235 to engage corresponding internal threads of a connector 226 of a handpiece body 12a. The tip device 11 can be configured to treat a root canal or a carious region on an exterior surface of the tooth.

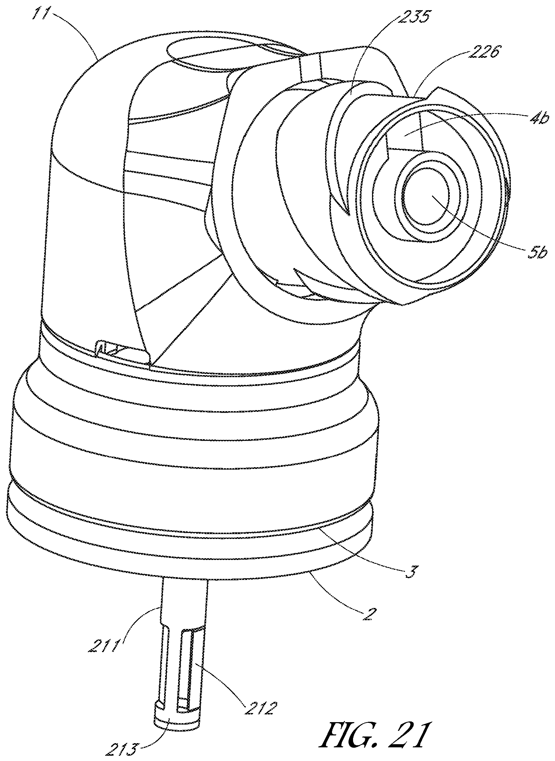

Figure 21 illustrates a schematic rear perspective view of a tip device 11 according to various embodiments. Unless otherwise noted, the components of the tip device of Figure 21 may be same as or generally similar to like-numbered components of the tip device 11 of Figure 19. Unlike the tip device 11 of Figure 19, the connector 226 includes external threads 235 to engage corresponding internal threads of a connector 226 of a handpiece body 112a.

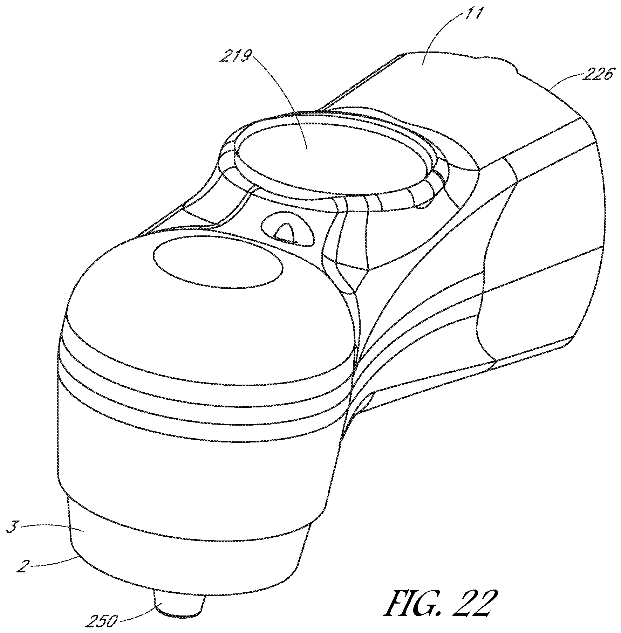

Figure 22 illustrates a schematic front perspective view of a tip device 11 according to various embodiments. Unless otherwise noted, the components of the tip device of Figure 22 may be same as or generally similar to like-numbered components of the tip device 11 of Figures 18A-B. Unlike the tip device of Figures 18A-B, the tip device 11 of Figure 22 includes an integrated communications device 219.

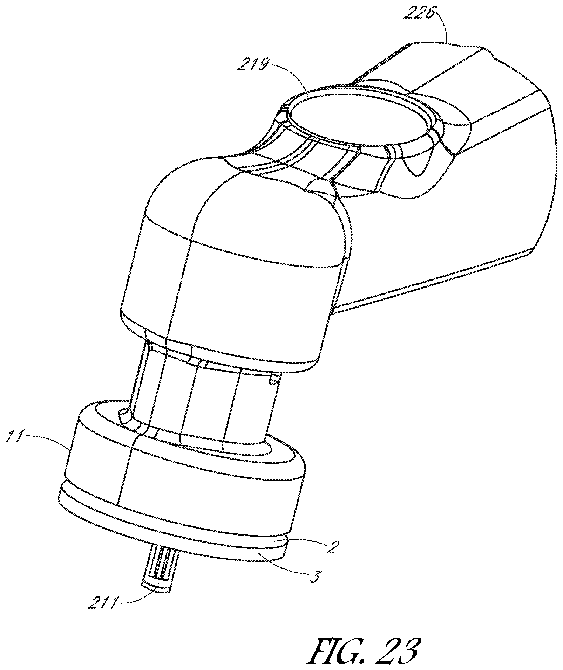

Figure 23 illustrates a schematic front perspective view of a tip device 11 according to various embodiments. Unless otherwise noted, the components of the tip device of Figure 23 may be same as or generally similar to like-numbered components of the tip device 11 of Figure 19. Unlike the tip device of Figure 19, the tip device 11 of Figure 23 includes an integrated communications device 219.

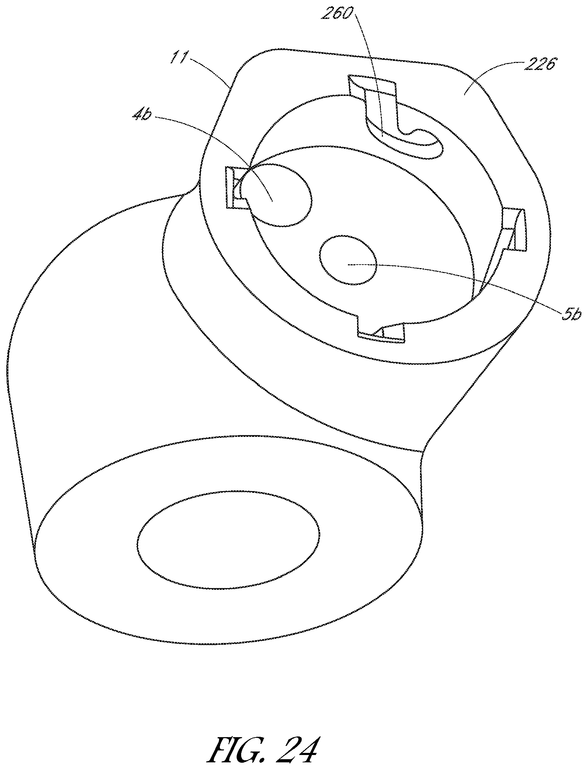

Figure 24 illustrates a schematic rear perspective view showing an alternative embodiment of a connector 226 of a tip device 11. The connector 226 has one or more bayonet style channels 260 molded, formed, or machined into the body of the tip device 11. The bayonet style allows the tip device 11 to be threaded on a handpiece body 12a until a positive stop is reached. The positive stop can be achieved by rotating cylindrical protrusions of a connector 225 of the handpiece body 12a through the channels 260, over a lip or edge in the channel, and then into a pocked or recessed area to provides a stable locking position. This design can be selected to ensure that the tip device 111 cannot be unthreaded or removed while the device is under pressure.

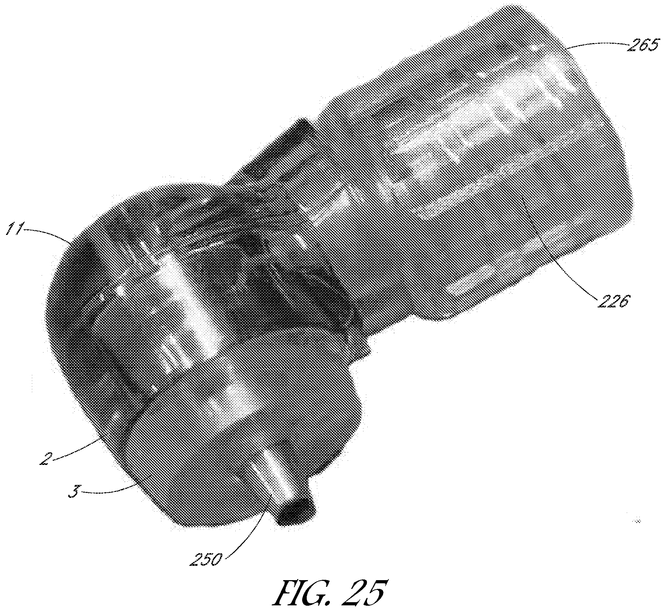

Figure 25 illustrates a perspective view of a tip device 11 according to various embodiments. Unless otherwise noted, the components of the tip device of Figure 25 may be same as or generally similar to like-numbered components of the tip device 11 of Figure 19. Unlike the embodiment of Figure 19, the connector 226 of the tip device 111 includes a rotational component 265, such as a rotational nut of a luer lock, that integrates one or more connection components (*e.g.,* threads, bayonet, etc.). This mechanism can facilitate connection of the tip device 11 to the handpiece 12a in such a way that orientation between the two is maintained throughout attachment. This may be beneficial if the sealing mechanism used to seal fluid inlet line 5 cannot be exposed to rotational movement.

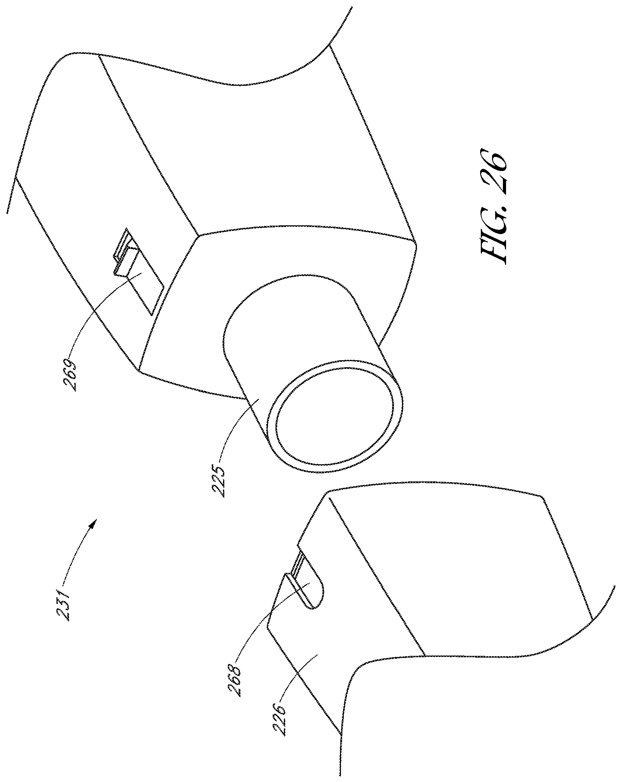

Figure 26 illustrates a schematic partial view of an alternative embodiment of a locking mechanism 231. The connector 226 of Figure 26 includes a mating slot 268. The mating slot 268 can be configured to receive a sliding lock 269 of a connector 225 of a handpiece body 12a. In combination with the sliding lock 269, the slot 268 can removably secure the distal tip device 11 in a fixed orientation relative to the handpiece body 12a.

### Disposable Tip Cover

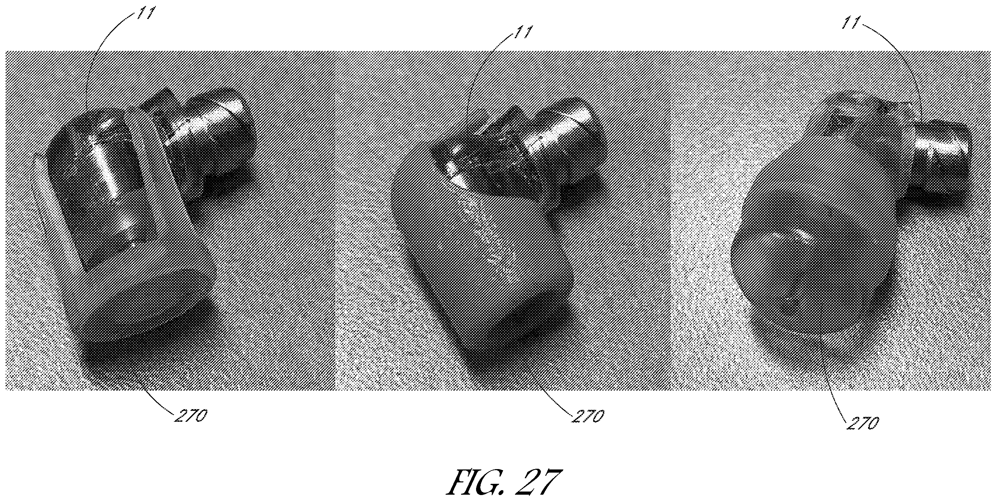

The tip devices 11 described with respect to Figures 5-25 may be provided with a cover 270, several embodiments of which are shown in Figure 27. In some embodiments, the cover 270 can beneficially protect the guide tube 211. The cover 270 may also seal the tip device 11. The cover can also provide occlusion of vent(s) 7, allowing the console to perform self-tests to detect the presence of tip 11 on the handpiece body 12a.

The cover 270 may take the form of a elastomeric cap which wraps around the distal end of the tip device 11, a plastic globe which encapsulates the distal end of the tip device 11, or a snap-on component which creates a standoff from the guide tube 211 and blocks off the fluid port(s). In some embodiments, a communications device 219 (e.g. RFID) may be integrated into the design of the cover 270.

### V. ADDITIONAL EXAMPLES OF REUSABLE HANDPIECES

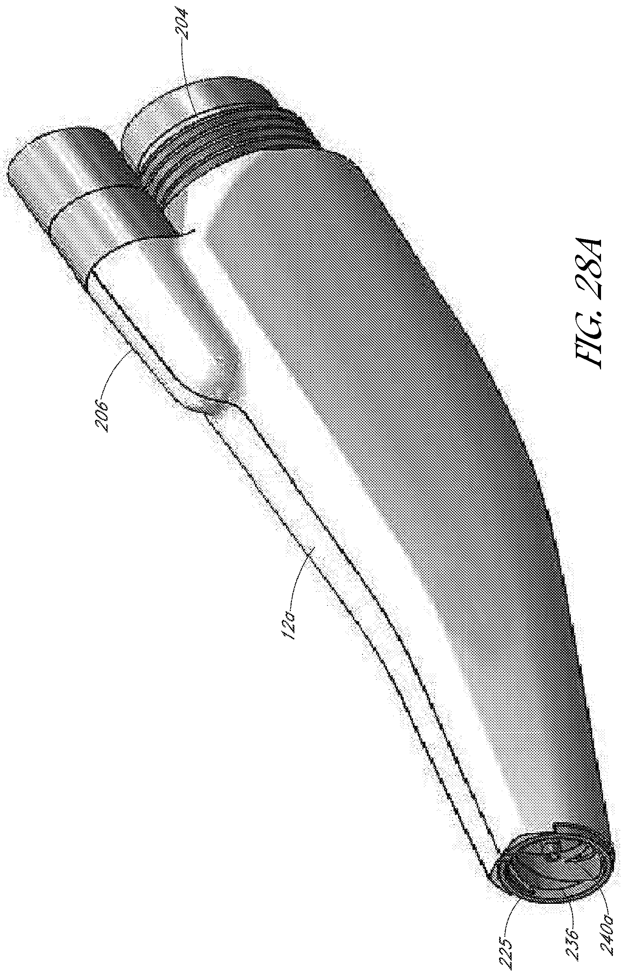

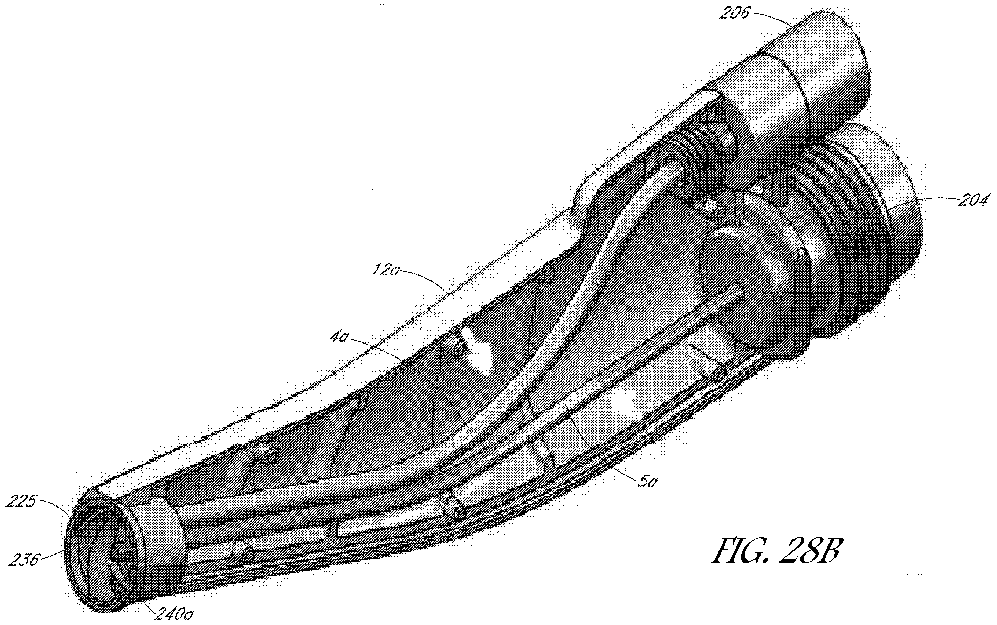

Figures 28A and 28B illustrate a schematic front perspective view and a schematic sectional perspective view, respectively, of a handpiece body 12a according to various embodiments. Unless otherwise noted, the components of the handpiece body 12a of Figures 28A-B may be same as or generally similar to like-numbered components of the handpiece body 12a of Figures 15-16F. Unlike the handpiece body 12a of Figures 15-16F, the connector 225 of the handpiece body 12a of Figures 28A-B includes a bore with internal threads 236 for coupling with external threads of a tip device 11. The handpiece 12a can also include a connector 240a, for example, similar to connector 240 for receipt in a bore of a tip device 11 to couple the fluid conduit 5a to a fluid conduit 5b of a tip device 11.

As described above, Figure 26 illustrates a schematic partial view of an alternative embodiment of a locking mechanism 231. The connector 225 of Figure 25 includes a sliding lock 269. The sliding lock 269 can be configured to be received in a mating slot 268 of a connector 226 of a handpiece body 12a. In combination, the sliding lock 269 and the slot 268 can removably secure the distal tip device 11 in a fixed orientation relative to the handpiece body 12a.

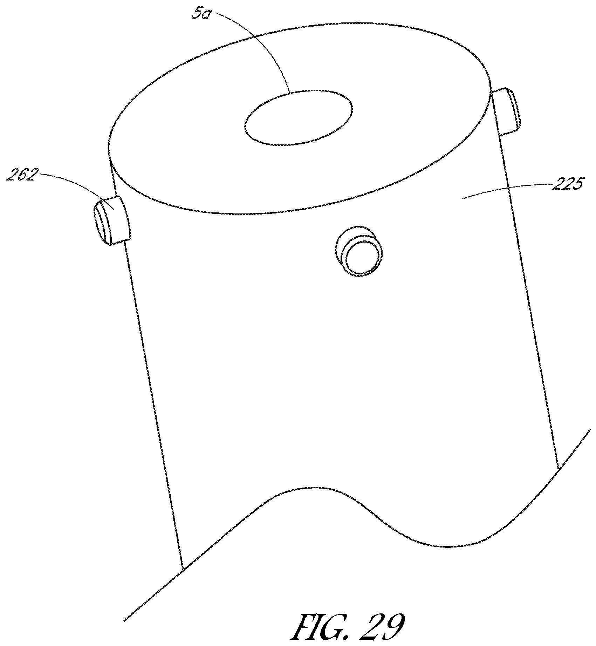

Figure 29 illustrates a schematic partial view of an alternative embodiment of a connector 225 of a handpiece body 12a. The connector 225 includes one or more protrusions 262 in the form of lugs or cylinders disposed radially around the exterior of the connector 225. The protrusions 262 may be bayonet style protrusions and can be configured to be received in bayonet style channels 260 of a tip device 11, for example, as described with respect to Figure 24.

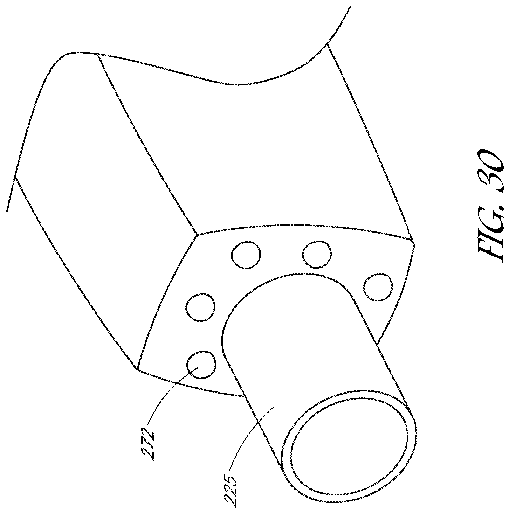

Figure 30 illustrates a schematic partial view of a handpiece body portion of an alternative embodiment of a locking mechanism 231. As shown in Figure 30, the handpiece body 12a can include one or more hemispherical protrusions 272 configured to be received in recesses of a tip device 11. In combination, the hemispherical protrusions 272 and recesses can removably secure the tip device 11 in a fixed orientation relative to the handpiece body 12a.

### VI. USE OF REMOVABLE TIP DEVICES

Described herein are various embodiments of removable tip devices 11 that can be coupled with a handpiece body 12a. The removability of the tip devices 11 allow for a single handpiece body 12a to be used in multiple procedures with multiple tip devices 11.

In some embodiments, a first tip device 11 can be connected to the handpiece body 12a before a treatment procedure. After the first tip device 11 is connected to the handpiece body 12a, a clinician can conduct a treatment procedure, such as a cleaning procedure. After the treatment procedure, the clinician can remove the first tip device 11 from the handpiece body 12a. After removal of the first tip device 11, a second tip device 11 can be coupled to the handpiece body 12, and a second treatment procedure can be performed. In some embodiments, the second tip device 11 can be of the same embodiment or of a generally similar embodiment as the first tip device 11. In other embodiments, the second tip device 11 can be of a different embodiment than that of the first tip device 11. For example, the first tip device 11 could be the tip device 11 of Figures 17A-B and the second tip device can be the tip device of Figures 18A-B.

In some embodiments, the handpiece body 12a can connect to multiple tip devices 11 configured for treatment of different types of teeth, *e.g.,* a first tip device for treatment of a molar tooth and a second tip device for treatment of an anterior or pre-molar tooth. In some embodiments, the handpiece body 12a can connect to multiple tip devices configure for treatment of different types of treatment regions, *e.g.,* a first tip device for treatment of a root canal and a second tip device for treatment of an external carious region.

The materials used in the embodiments disclosed herein can be any suitable types of materials. For example, the materials can be selected such that the treatment instrument 1 materials are suitable for repeated exposures to various procedure fluids. The treatment instrument 1 materials can be suitable for repeated exposure to autoclave or other clinically utilized sterilization processes. In the disclosed embodiments, the tip device 11 materials can be suitable for one-time exposure to procedure fluids. The tip device 11 materials can be suitable for exposure to gamma sterilization or any other suitable sterilization process.

Reference throughout this specification to "some embodiments" or "an embodiment" means that a particular feature, structure, element, act, or characteristic described in connection with the embodiment is included in at least one embodiment. Thus, appearances of the phrases "in some embodiments" or "in an embodiment" in various places throughout this specification are not necessarily all referring to the same embodiment and may refer to one or more of the same or different embodiments. Furthermore, the particular features, structures, elements, acts, or characteristics may be combined in any suitable manner (including differently than shown or described) in other embodiments. Further, in various embodiments, features, structures, elements, acts, or characteristics can be combined, merged, rearranged, reordered, or left out altogether. Thus, no single feature, structure, element, act, or characteristic or group of features, structures, elements, acts, or characteristics is necessary or required for each embodiment. All possible combinations and subcombinations are intended to fall within the scope of this disclosure.

As used in this application, the terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Similarly, it should be appreciated that in the above description of embodiments, various features are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that any claim require more features than are expressly recited in that claim.

The foregoing description sets forth various example embodiments and other illustrative, but non-limiting, embodiments disclosed herein. The description provides details regarding combinations, modes, and uses of the disclosed embodiments. Other variations, combinations, modifications, equivalents, modes, uses, implementations, and/or applications of the disclosed features and aspects of the embodiments are also within the scope of this disclosure, including those that become apparent to those of skill in the art upon reading this specification. Additionally, certain objects and advantages of the embodiments are described herein. It is to be understood that not necessarily all such objects or advantages may be achieved in any particular embodiment. Thus, for example, those skilled in the art will recognize that the inventions may be embodied or carried out in a manner that achieves or optimizes one advantage or group of advantages as taught herein without necessarily achieving other objects or advantages as may be taught or suggested herein. Also, in any method or process disclosed herein, the acts or operations making up the method or process may be performed in any suitable sequence and are not necessarily limited to any particular disclosed sequence.

## Claims

1. An apparatus (1) for treating a tooth, the apparatus (1) comprising:
a tip device (11) comprising:
a fluid platform (2) to be positioned against a region of a tooth, the fluid platform (2) at least partially defining a chamber (6) to be in fluid communication with a treatment region of the tooth;
a pressure wave generator (10) coupled to the fluid platform (2), the pressure
wave generator (10) configured to generate pressure waves in fluid provided at the treatment region;
a fluid outlet to convey fluid from the chamber (6);
**characterized in**
**that** the tip device (11) further comprises a connector (226) that is configured to removably connect the tip device (11) to a connector (225) of a handpiece body (12a).

2. The apparatus (1) of Claim 1, wherein the tip device (11) comprises one or more vents (7) configured to permit ambient air to be drawn into an outlet line downstream of the fluid outlet.

3. The apparatus (1) of Claim 1 or 2, wherein the pressure wave generator (10) comprises a liquid jet device.

4. The apparatus (1) of Claim 1 or 2, wherein the pressure wave generator (10) comprises a laser device.

5. The apparatus (1) of any one of Claims 1 to 4, wherein the tip device (11) comprises a tracking mechanism storing a unique identifier associated with the tip device (11).

6. The apparatus (1) of Claim 5, wherein the tracking mechanism is one of a radiofrequency identification (RFID) tag, a barcode, a quick response (QR) code or an electrically erasable programmable read-only memory (EEPROM).

7. The apparatus (1) of any one of Claims 1 to 6, wherein the pressure wave generator (10) comprises an elongated guide tube (211) extending through the chamber (6) and sized to be positioned in part within a chamber (6) of a tooth when the fluid platform (2) is positioned against the region of the tooth.

8. The apparatus (1) of any one of Claims 1 to 6, wherein the fluid platform (2) is configured to interact with an anterior or pre-molar tooth through a pre-formed side opening in said tooth, and wherein the pressure wave generator (10) is positioned outside of the anterior or pre-molar tooth when the fluid platform (2) interacts with the anterior or pre-molar tooth.

9. The apparatus (1) of any one of Claims 1 to 6, wherein the fluid platform (2) is sized to be positioned against and at least partially seal against an external surface of the tooth over a carious region such that the chamber (6) defines an enclosed volume around the carious region at the external surface of the tooth.

10. The apparatus (1) of Claim 9, wherein the pressure wave generator (10) is positioned outside of the carious region when the fluid platform (2) is coupled to the external surface of the tooth.

11. The apparatus (1) of Claim 9, wherein at least a portion of the pressure wave generator (10) is positioned within the chamber (6).

12. The apparatus (1) of any one of Claims 1 to 6, wherein the fluid platform (2) comprises an upper wall (17) and a sidewall (13) extending from the upper wall (17), the upper wall (17) and sidewall (13) at least partially defining the chamber (6), the chamber (6) having a central axis, wherein the fluid outlet comprises a suction port in the upper wall (17) of the fluid platform (2), the suction port disposed closer to the sidewall (13) than to the central axis of the chamber (6).

13. The apparatus (1) of Claim 12, when dependent on claim 3, wherein the pressure wave generator (10) is configured to direct a liquid stream across the chamber (6) along a stream axis non-parallel to the central axis, and wherein the central axis lies on a plane substantially transverse to the stream axis and the stream axis intersects the plane at a location closer to the central axis than to the sidewall (13).

14. A system for treating one or more teeth, the system comprising the apparatus (1) of claim 1 and a handpiece body (12a), wherein the handpiece body (12a) comprises a connector (225) configured to removably and alternatively connect to a plurality of tip devices (11), the plurality of tip devices (11) comprising at least one of said tip device (11) of any of claims 1 to 13.

## Patentansprüche

1. Eine Vorrichtung (1) zur Behandlung eines Zahns, wobei die Vorrichtung (1) Folgendes umfasst:
eine Aufsatzvorrichtung (11), die Folgendes umfasst:
eine Fluidplattform (2), die an einem Bereich eines Zahns zu positionieren ist, wobei die Fluidplattform (2) zumindest teilweise eine Kammer (6) bildet, die mit einem Behandlungsbereich des Zahns in Fluidverbindung stehen soll;
einen mit der Fluidplattform (2) gekoppelten Druckwellengenerator (10), wobei der Druckwellengenerator (10) dazu ausgelegt ist, Druckwellen in einem am Behandlungsbereich bereitgestellten Fluid zu erzeugen;
einen Fluidauslass zum Abführen von Fluid aus der Kammer (6);
**dadurch gekennzeichnet, dass** die Aufsatzvorrichtung (11) ferner ein Verbindungselement (226) umfasst, das dazu ausgelegt ist, die Aufsatzvorrichtung (11) lösbar mit einem Verbindungselement (225) eines Handstückkörpers (12a) zu verbinden.

2. Die Vorrichtung (1) nach Anspruch 1, wobei die Aufsatzvorrichtung (11) eine oder mehrere Belüftungsöffnungen (7) umfasst, die dazu ausgelegt sind, das Ansaugen von Umgebungsluft in eine dem Fluidauslass nachgeschaltete Auslassleitung zu ermöglichen.

3. Die Vorrichtung (1) nach Anspruch 1 oder 2, wobei der Druckwellengenerator (10) eine Flüssigkeitsstrahlvorrichtung umfasst.

4. Die Vorrichtung (1) nach Anspruch 1 oder 2, wobei der Druckwellengenerator (10) eine Laservorrichtung umfasst.

5. Die Vorrichtung (1) nach einem der Ansprüche 1 bis 4, wobei die Aufsatzvorrichtung (11) einen Nachverfolgungsmechanismus umfasst, der eine der Aufsatzvorrichtung (11) zugeordnete eindeutige Kennung speichert.

6. Die Vorrichtung (1) nach Anspruch 5, wobei der Nachverfolgungsmechanismus entweder ein Funkfrequenzidentifikations-Tag (RFID-Tag), ein Strichcode, ein Quick-Response-Code (QR-Code) oder ein elektrisch löschbarer programmierbarer Festwertspeicher (EEPROM) ist.

7. Die Vorrichtung (1) nach einem der Ansprüche 1 bis 6, wobei der Druckwellengenerator (10) ein längliches Führungsrohr (211) umfasst, das sich durch die Kammer (6) erstreckt und so bemessen ist, dass es teilweise innerhalb einer Kammer (6) eines Zahns positioniert werden kann, wenn die Fluidplattform (2) an dem Bereich des Zahns positioniert ist.

8. Die Vorrichtung (1) nach einem der Ansprüche 1 bis 6, wobei die Fluidplattform (2) dazu ausgelegt ist, durch eine vorgeformte seitliche Öffnung in einem Frontzahn oder Prämolaren mit diesem Zahn zusammenzuwirken, und wobei der Druckwellengenerator (10) außerhalb des Frontzahns oder Prämolaren positioniert ist, wenn die Fluidplattform (2) mit dem Frontzahn oder Prämolaren zusammenwirkt.

9. Die Vorrichtung (1) nach einem der Ansprüche 1 bis 6, wobei die Fluidplattform (2) so bemessen ist, dass sie über einem kariösen Bereich an einer Außenfläche des Zahns positioniert werden und diese zumindest teilweise abdichten kann, sodass die Kammer (6) ein eingeschlossenes Volumen um den kariösen Bereich an der Außenfläche des Zahns bildet.

10. Die Vorrichtung (1) nach Anspruch 9, wobei der Druckwellengenerator (10) außerhalb des kariösen Bereichs positioniert ist, wenn die Fluidplattform (2) mit der Außenfläche des Zahns gekoppelt ist.

11. Die Vorrichtung (1) nach Anspruch 9, wobei zumindest ein Abschnitt des Druckwellengenerators (10) innerhalb der Kammer (6) positioniert ist.

12. Die Vorrichtung (1) nach einem der Ansprüche 1 bis 6, wobei die Fluidplattform (2) eine obere Wand (17) und eine sich von der oberen Wand (17) erstreckende Seitenwand (13) umfasst, wobei die obere Wand (17) und die Seitenwand (13) zumindest teilweise die Kammer (6) bilden, wobei die Kammer (6) eine Mittelachse aufweist, wobei der Fluidauslass eine Saugöffnung in der oberen Wand (17) der Fluidplattform (2) umfasst und wobei die Saugöffnung näher an der Seitenwand (13) als an der Mittelachse der Kammer (6) angeordnet ist.

13. Die Vorrichtung (1) nach Anspruch 12, wenn er von Anspruch 3 abhängt, wobei der Druckwellengenerator (10) dazu eingerichtet ist, einen Flüssigkeitsstrahl entlang einer zur Mittelachse nicht parallelen Strahlachse durch die Kammer (6) zu richten, und wobei die Mittelachse in einer im Wesentlichen quer zur Strahlachse verlaufenden Ebene liegt und die Strahlachse die Ebene an einer Stelle schneidet, die näher an der Mittelachse als an der Seitenwand (13) liegt.

14. Ein System zur Behandlung eines oder mehrerer Zähne, wobei das System die Vorrichtung (1) nach Anspruch 1 und einen Handstückkörper (12a) umfasst, wobei der Handstückkörper (12a) ein Verbindungselement (225) umfasst, das dazu ausgelegt ist, sich lösbar und wahlweise mit einer Vielzahl von Aufsatzvorrichtungen (11) zu verbinden und wobei die Vielzahl von Aufsatzvorrichtungen (11) mindestens eine der genannten Aufsatzvorrichtungen (11) nach einem beliebigen der Ansprüche 1 bis 13 umfasst.

## Revendications

1. Appareil (1) destiné à traiter une dent, l'appareil (1) comprenant :
un dispositif d'embout (11) comprenant :
une plateforme à fluide (2) à positionner contre une zone d'une dent, la plateforme à fluide (2) définissant au moins en partie une chambre (6) devant être en communication de fluide avec une zone de traitement de la dent ;
un générateur d'ondes de pression (10) couplé à la plateforme à fluide (2), le générateur d'ondes de pression (10) étant configuré pour générer des ondes de pression dans un fluide délivré au niveau de la zone de traitement ;
un orifice de sortie de fluide pour acheminer du fluide depuis la chambre (6) ;
**caractérisé en ce**
**que** le dispositif d'embout (11) comprend en outre un raccord (226) qui est configuré pour relier de manière retirable le dispositif d'embout (11) à un raccord (225) d'un corps de poignée (12a).

2. Appareil (1) selon la revendication 1, dans lequel le dispositif d'embout (11) comprend un ou plusieurs évents (7) configurés pour permettre d'aspirer de l'air ambiant jusque dans une ligne de sortie en aval de l'orifice de sortie de fluide.

3. Appareil (1) selon la revendication 1 ou 2, dans lequel le générateur d'ondes de pression (10) comprend un dispositif à jet de liquide.

4. Appareil (1) selon la revendication 1 ou 2, dans lequel le générateur d'ondes de pression (10) comprend un dispositif laser.

5. Appareil (1) selon l'une quelconque des revendications 1 à 4, dans lequel le dispositif d'embout (11) comprend un mécanisme de suivi stockant un identifiant unique associé au dispositif d'embout (11).

6. Appareil (1) selon la revendication 5, dans lequel le mécanisme de suivi est l'un d'une étiquette d'identification par radiofréquence (RFID), d'un code à barres, d'un code à réponse rapide (QR) ou d'une mémoire morte électriquement programmable et effaçable (EEPROM).

7. Appareil (1) selon l'une quelconque des revendications 1 à 6, dans lequel le générateur d'ondes de pression (10) comprend un tube de guidage allongé (211) s'étendant à travers la chambre (6) et dimensionné pour être positionné en partie au sein de la chambre (6) d'une dent lorsque la plateforme à fluide (2) est positionnée contre la zone de la dent.

8. Appareil (1) selon l'une quelconque des revendications 1 à 6, dans lequel la plateforme à fluide (2) est configurée pour interagir avec une dent antérieure ou une prémolaire par une ouverture latérale préalablement formée dans ladite dent, et où le générateur d'ondes de pression (10) est positionné à l'extérieur de la dent antérieure ou de la prémolaire lorsque la plateforme à fluide (2) interagit avec la dent antérieure ou la prémolaire.

9. Appareil (1) selon l'une quelconque des revendications 1 à 6, dans lequel la plateforme à fluide (2) est dimensionnée pour être positionnée contre et assurer au moins en partie une étanchéité contre une surface externe de la dent par-dessus une zone cariée de telle sorte que la chambre (6) définit un volume fermé autour de la zone cariée au niveau de la surface externe de la dent.

10. Appareil (1) selon la revendication 9, dans lequel le générateur d'ondes de pression (10) est positionné à l'extérieur de la zone cariée lorsque la plateforme à fluide (2) est couplée à la surface externe de la dent.

11. Appareil (1) selon la revendication 9, dans lequel au moins une partie du générateur d'ondes de pression (10) est positionnée au sein de la chambre (6).

12. Appareil (1) selon l'une quelconque des revendications 1 à 6, dans lequel la plateforme à fluide (2) comprend une paroi supérieure (17) et une paroi latérale (13) s'étendant depuis la paroi supérieure (17), la paroi supérieure (17) et la paroi latérale (13) définissant au moins en partie la chambre (6), la chambre (6) présentant un axe central, où l'orifice de sortie de fluide comprend un orifice d'aspiration dans la paroi supérieure (17) de la plateforme à fluide (2), l'orifice d'aspiration étant disposé plus près de la paroi latérale (13) que de l'axe central de la chambre (6).

13. Appareil (1) selon la revendication 12, lorsqu'il dépend de la revendication 3, dans lequel le générateur d'ondes de pression (10) est configuré pour orienté un flux de liquide à travers la chambre (6) le long d'un axe de flux non parallèle à l'axe central, et où l'axe central s'inscrit dans un plan sensiblement transversal à l'axe de flux et l'axe de flux coupe le plan en un point plus proche de l'axe central que de la paroi latérale (13).

14. Système destiné à traiter une ou plusieurs dents, le système comprenant l'appareil (1) selon la revendication 1 et un corps de poignée (12a), où le corps de poignée (12a) comprend un raccord (225) configuré pour être relié de manière retirable et alternative à une pluralité de dispositifs d'embout (11), la pluralité de dispositifs d'embout (11) comprenant au moins un dit dispositif d'embout (11) selon l'une quelconque des revendications 1 à 13.
